# EUROPEAN PATENT APPLICATION

(11) **EP 0 852 249 A1**
(43) Date of publication of application: **08.07.1998**
(21) Application number: 97930827.7
(22) Date of filing: 17.07.1997
(51) Int. Cl.: C08L 81/02, C08K 3/00, C08K 5/00

(54) **POLYPHENYLENE SULFIDE RESIN COMPOSITION**

(30) Priority: 22.07.1996 JP 19960192192; 21.02.1997 JP 19970037482
(71) Applicant: TORAY INDUSTRIES, INC., Tokyo 103 (JP)
(72) Inventor: ISHIO, Atsushi, Nagoya-shi, Aichi 457 (JP); KOBAYASHI, Sadayuki, Nagoya-shi, Aichi 467 (JP); KOBAYASHI, Kazuhiko, Tokoname-shi, Aichi 479 (JP)
(74) Representative: Coleiro, Raymond, et al
(86) International application number: PCT/JP1997/002487
(87) International publication number: WO 1998/003590

(57) **Abstract**

A polyphenylene sulfide resin composition comprising from 99.9 to 80% by weight of a polyphenylene sulfide resin and from 0.1 to 20% by weight of an aromatic group-containing oligomer, the crystallization peak temperature in temperature rise of the composition being 125°C or lower, controls occurrence of burr and is excellent in the flowability and the crystallization characteristics. Accordingly, it is especially useful as a resin composition for producing molded articles such as miniature precision parts and the like.

## Description

### Technical Field

The present invention relates to a polyphenylene sulfide resin composition which is excellent in burr characteristics, flowability and crystallization characteristics.

### Technical Background

A polyphenylene sulfide resin (hereinafter abbreviated as "PPS resin") has preferable properties as engineering plastics, such as a heat resistance, a fire retardance, a rigidity, electrical insulating properties and the like. Accordingly, it has been used in various electrical parts, mechanical parts, automobile parts and the like which are chiefly produced through injection molding.

However, the PPS resin causes occurrence of burr in molding relatively often, and its use is restricted in miniature precision parts requiring less occurrence of burr in particular.

Under these circumstances, several methods have been to date investigated to reduce the occurrence of barr in the PPS resin. Examples thereof include a method in which a highly crosslinked PPS resin is contained as an improver of properties [Japanese Laid-Open (Kokai) No. 9,266/1989], a method in which a silane compound is added to a PPS resin [Japanese Laid-Open (Kokai) No. 251,430/1988], and a method in which a combination of a specific linear PPS resin and a crosslinked PPS resin is used in a base polymer, and a silane coupling agent is further used [Japanese Laid-Open (Kokai) No. 197,562/1991].

In these prior techniques, the occurrence of burr is reduced to some extent, but the PPS resin has a large amount of burr compared to other engineering plastics such as a PBT resin, a nylon resin and the like. Thus, a further reduction in occurrence of burr has been in demand. When a crosslinked polymer or a silane coupling agent is used, the occurrence of burr is reduced to some extent, but thickening occurs. Year by year, sizes of various electrical and electronic parts have been increased, and these parts have had a precision complex shape. In this situation, when a flowability of a resin is poor, the resin can hardly be molded. Further, when a long molded article is produced using a crosslinked polymer or a PPS resin thickened with a silane coupling agent, the amount of burr is rather increased with the increase in the injection molding pressure. Accordingly, a PPS resin composition which has an excellent flowability and in which burr occurs less has been in demand.

Further, especially in the injection molding of articles having a complex shape or articles having a long size, such a poor moldability tends to be provided that the molded article is deformed in ejection of the same. In order to prevent this phenomenon, the improvement in the crystallization rate has been required along with the reduction in the occurrence of burr.

Since the resin temperature is mildly decreased in the vicinity of a center of a molded article, the crystallization of the resin proceeds in a relatively high temperature region. Meanwhile, the resin temperature is rapidly decreased in the vicinity of the surface of the molded article, and the crystallization of the resin proceeds in a relatively low temperature region. Therefore, in order to exhibit an excellent injection moldability regardless of a thickness of a molded article, it is necessary to improve the crystallization rate in any temperature region.

Some investigations have been conducted so far to expedite the crystallization of the PPS resin. For example, Japanese Laid-Open (Kokai) No. 283,155/1987 discloses that poly(phenylene sulfide ketone) or polyether ether ketone is added to a PPS resin to expedite crystallization of the PPS resin in a relatively high temperature region, and that this is due to a nucleation effect of such an additive. The present inventors traced this method, and then found that this method is effective for expediting the crystallization of the PPS resin in a relatively high temperature region, but the effect is not said to be satisfactory, and that almost no effect is observed in the expedition of the crystallization of the PPS resin in a low temperature region. Further, for example, Japanese Laid-Open (Kokai) No. 230,848/1987 discloses that a monomeric carboxylic acid ester is added to a PPS resin to expedite the crystallization of the PPS resin in a relatively low temperature region. Nevertheless, such an additive has almost no effect in the expedition of the crystallization of the PPS resin in a relatively high temperature region. Moreover, this additive tends to be decomposed or volatilized at a high process temperature of the PPS resin, inviting the increase in the amount of gas generated in the composition and the increase in the occurrence of burr.

Under these circumstances, the present inventors have assiduously conducted investigations to obtain a PPS resin composition in which occurrence of burr is reduced, which exhibits an excellent flowability and which has a high crystallization rate in both high and low temperature regions. Consequently, they have found that the above-mentioned problems could have been solved at once upon using a PPS resin composition characterized in that this composition is obtained by adding an aromatic group-containing oligomer to a specific amount of PPS resin and the crystallization peak temperature in temperature rise thereof is 125°C or lower. This finding has led to the completion of the present invention.

It is disclosed in Japanese Laid-Open (Kokai) No. 123,159/1990 that the PPS resin is mixed with an aromatic group-containing polyamide. However, there is nothing in Japanese Laid-Open (Kokai) No. 123,159/1990 that a specific amount of a specific aromatic group-containing amide oligomer is added to remarkably reduce occurrence of burr and expedite crystallization of the PPS resin especially in a relatively low temperature region. Further, Japanese Laid-Open (Kokai) No. 57,138/1994 discloses that a specific polyamide is added to a PPS resin to obtain a PPS resin composition having an excellent moldability. However, this document neither discloses that burr is specifically reduced through the addition of a specific aromatic group-containing amide oligomer, nor does it disclose that the crystallization rate is improved in high and low temperature regions. Still further, Japanese Laid-Open (Kokai) No. 228,778/1995 discloses that an amide oligomer is added to a PPS resin to improve an adhesion to an epoxy resin. However, Japanese Laid-Open (Kokai) No. 228,778/1995 does not disclose at all that a specific aromatic group-containing amide oligomer is added in a specific amount to markedly reduce occurrence of burr and expedite crystallization of the PPS resin. Furthermore, Japanese Laid-Open (Kokai) No. 196,364/1985 discloses that the addition of an aromatic oligoamide hating a total of from 1 to 6 amide and hydrazide linkages is effective for expediting crystallization of the PPS resin and improving the heat resistance, but it does not describe at all the burr characteristics and the flowability. Moreover, Japanese Laid-Open (Kokai) No. 157,640/1996 discloses a technology of obtaining a PPS resin composition in which the addition of an oligoamide compound increases a crystallization rate of a PPS resin and improves mechanical properties or thermal properties of a molded article. However, it does not disclose at all that the addition of a specific aromatic group-containing oligomer markedly reduce occurrence of burr, nor does it disclose that a flowability is not impaired in the injection molding.

### Disclosure of the Invention

The present invention is to provide the following composition, a process for producing the same, and a molded article.
(1) A polyphenylene sulfide resin composition comprising (A) from 99.9 to 80% by weight of a polyphenylene sulfide resin and (B) from 0.1 to 20% by weight of an aromatic group-containing oligomer, the crystallization peak temperature in temperature rise of the composition being 125°C or lower.
(2) The polyphenylene sulfide resin composition recited in the above-mentioned 1, wherein the crystallization peak temperature in temperature drop of (B) the aromatic group-containing oligomer is 240°C or higher.
(3) The polyphenylene sulfide resin composition recited in the above-mentioned 1, wherein the molecular weight of (B) the aromatic group-containing oligomer is 10,000 or less.
(4) The polyphenylene sulfide resin composition recited in the above-mentioned 1, wherein (4) the aromatic group-containing oligomer is a polymer which is obtained through at least one linkage selected from the group consisting of an amide group, a hydrazide group, an imide group, an ester group, an ether group, a ketone group, a urethane group and a sulfone group.
(5) The polyphenylene sulfide resin composition recited in the above-mentioned 1, wherein (B) the aromatic group-containing oligomer is an aromatic group-containing oligomer having a melting peak temperature of 370°C or lower as measured by a differential scanning calorimeter (at a scanning rate of 20°C/min).
(6) The polyphenylene sulfide resin composition recited in the above-mentioned 4, wherein (B) the aromatic group-containing oligomer is an aromatic group-containing amide oligomer which is a polycondensate containing one or more residues selected from divalent residues represented by the following structural formulas (I), (II) and (III) and one or more residues selected from the divalent residues represented by the following structural formulas (IV), (V) and (VI), the residues being linked through an amide bond, and which has a relative viscosity (measured at 25°C in a 1-% sulfuric acid solution) of from 1.01 to 2.00.

   -CO-R¹-CO- (I)

   -NH-R²-NH- (II)

   -NH-R³-CO- (III)

   -CO-Ar¹-CO- (IV)

   -NH-Ar²-NH- (V)

   -NH-Ar³-CO- (VI)

   wherein
   R¹, R² and R³ each represent a divalent non-aromatic organic group having from 2 to 20 carbon atoms, and they may be the same or different, and
   Ar¹, Ar² and Ar³ each represent a divalent aromatic group having from 6 to 20 carbon atoms, and they may be the same or different.
(7) The polyphenylene sulfide resin composition recited in the above-mentioned 6, wherein the aromatic group-containing amide oligomer is a multi-component co-oligomer containing 3 or more residues.
(8) The polyphenylene sulfide resin composition recited in the above-mentioned 6, wherein (B) the aromatic group-containing amide oligomer is a polycondensate obtained by linking the divalent residues represented by the above-mentioned structural formulas (I), (II) and (IV) through the amide bond, the molar ratio of (I) and (IV) being (I)/(IV) = (80 to 5)/(20 to 95).
(9) The polyphenylene sulfide resin composition recited in the above-mentioned 6, wherein (B) the aromatic group-containing amide oligomer is a polycondensate obtained by linking the divalent residues represented by the above-mentioned structural formulas (II), (III) and (IV) through the amide bond, the molar ratio of (III) and (IV) being (III)/(IV) = (75 to 10)/(25 to 90).
(10) The polyphenylene sulfide resin composition recited in the above-mentioned 6, wherein (B) the aromatic group-containing amide oligomer is a polycondensate obtained by linking the divalent residue represented by the above-mentioned structural formula (II) and at least two divalent residues represented by the above-mentioned structural formula (IV) through the amide bond.
(11) The polyphenylene sulfide resin composition recited in the above-mentioned 6, wherein the relative viscosity (measured at 25°C in a 1-% sulfuric acid solution) of (B) the aromatic group-containing amide oligomer is at least 1.01 and at most 1.70.
(12) The polyphenylene sulfide resin composition recited in the above-mentioned 6, wherein at least a part of the end of (B) the aromatic group-containing amide oligomer is capped with a monocarboxylic acid having from 1 to 20 carbon atoms and/or a monoamine having from 1 to 20 carbon atoms.
(13) The polyphenylene sulfide resin composition recited in the above-mentioned 4, wherein (B) the aromatic group-containing oligomer is an aromatic group-containing amide oligomer which is a polycondensate obtained by linking divalent residues represented by the following structural formulas (VII), (VIII) and (IX) and one or more organic residues selected from monovalent residues represented by the following structural formulas (X) and (XI) through an amide bond.

   -NH-Ar⁴-NH- (VII)

   -NH-Ar⁵-CO- (VIII)

   -CO-Ar⁶-CO- (IX)

   wherein
   Ar⁴, Ar⁵ and Ar⁶ each represent an organic group containing a divalent aromatic group having from 6 to 20 carbon atoms, and they may be the same or different.

      -NH-Ar⁷ (X)

      -CO-Ar⁸ (XI)
   wherein
   Ar⁷ and Ar⁸ each represent an organic group containing a monovalent aromatic group having from 6 to 20 carbon atoms, and they may be the same or different.
(14) The polyphenylene sulfide resin composition recited in the above-mentioned 4, wherein (B) the aromatic group-containing oligomer is an aromatic group-containing ester oligomer which is a polycondensate obtained by linking divalent residues represented by the following structural formulas (XII), (XIII) and (XIV) and one or more organic residues selected from monovalent residues represented by the following structural formulas (XV) and (XVI) through an ester linkage.

   -O-Ar⁹-O- (XII)

   -O-Ar¹⁰-CO- (XIII)

   -CO-Ar¹¹-CO- (XIV)

   wherein
   Ar⁹, Ar¹⁰ and Ar¹¹ each represent a divalent aromatic group-containing organic group having from 6 to 20 carbon atoms, and they may be the same or different

      -O-Ar¹² (XV)

      -CO-Ar¹³ (XVI)
   wherein
   Ar¹² and Ar¹³ each represent an organic group containing a monovalent aromatic group having from 6 to 20 carbon atoms, and they may be the same or different.
(15) The polyphenylene sulfide resin composition recited in the above-mentioned 1, wherein the crystallization peak temperature in temperature rise of (A) the polyphenylene sulfide resin as measured by a differential scanning calorimeter (at a scanning rate of 20°C/min) is 135°C or lower.
(16) The polyphenylene sulfide resin composition recited in the above-mentioned 1, wherein the crystallization peak temperature in temperature drop of (A) the polyphenylene sulfide resin as measured by a differential scanning calorimeter (at a scanning rate of 20°C/min) is 210°C or higher.
(17) The polyphenylene sulfide resin composition recited in the above-mentioned 1, wherein (A) the polyphenylene sulfide resin has a melt flow rate in 5-minute residence of at least 100 g/10 min as prescribed in ASTM D1238-86 (at 315.5°C under a load of 5,000 g).
(18) The polyphenylene sulfide resin composition recited in the above-mentioned 1, wherein (A) the polyphenylene sulfide resin is a polyphenylene sulfide resin mixture of (A-1) from 5 to 90% by weight of a polyphenylene sulfide resin having a number average molecular weight of from 7,000 to 15,000 as measured by gel permeation chromatography using 1-chloronaphthalene as a solvent and having a total ash content of 0.3% by weight or less, and (A2) from 95 to 10% by weight of a polyphenylene sulfide resin being substantially free from a crosslinked structure and having a number average molecular weight of from 3,000 to 6,000 as measured in the above-mentioned manner.
(19) The polyphenylene sulfide resin composition recited in the above-mentioned 18, wherein (A1) the polyphenylene sulfide resin is (A1-1) a polyphenylene sulfide resin being substantially free from a crosslinked structure, having a number average molecular weight of from 7,000 to 15,000 as measured by gel permeation chromatography using 1-chloronaphthalene as a solvent and having a total ash content of 0.3% by weight or less.
(20) The polyphenylene sulfide resin composition recited in the above-mentioned 18, wherein (A1) the polyphenylene sulfide resin is a polyphenylene sulfide resin having a crosslinked structure, having a number average molecular weight of from 7,000 to 15,000 as measured by gel permeation chromatography using 1-chloronaphtha-lene as a solvent and having a total ash content of 0.3% by weight or less, a melt flow rate in 15-minute residence as prescribed in ASTM D1238-86 (at 315.5°C under a load of 5,000 g) being between 50 and 95% of a melt flow rate in 5-minute residence.
(21) The polyphenylene sulfide resin composition recited in the above-mentioned 1, which further comprises from 10 to 400 parts by weight of (C) a filler per 100 parts by weight in total of (A) the polyphenylene sulfide resin and (B) the aromatic group-containing oligomer.
(22) The polyphenylene sulfide resin composition recited in the above-mentioned 21, wherein (C) the filler is a non-fibrous filler and/or a fibrous filler.
(23) The polyphenylene sulfide resin composition recited in the above-mentioned 22, wherein (C) the filler is (C-1) a glass fiber.
(24) The polyphenylene sulfide resin composition recited in the above-mentioned 23, wherein (C-1) the glass fiber has a diameter of at least 8 µm and at most 15 µm.
(25) The polyphenylene sulfide resin composition recited in the above-mentioned 23, wherein (C-1) the glass fiber has a glass fiber length of 400 µm or less on the weight average in the polyphenylene sulfide resin composition.
(26) The polyphenylene sulfide resin composition recited in the above-mentioned 1, which further comprises (D) from 0.1 to 5 parts by weight, per 100 parts by weight in total of (A) the polyphenylene sulfide resin and (B) the aromatic group-containing oligomer, of an alkoxysilane compound containing at least one functional group selected from an epoxy group, an amino group, an isocyanate group, a hydroxyl group, a mercapto group and a ureido group.
(27) The polyphenylene sulfide resin composition recited in the above-mentioned 26, which is formed by mixing (A) the polyphenylene sulfide resin with (D) the alkoxysilane compound containing at least one functional group selected from an epoxy group, an amino group, an isocyanate group, a hydroxyl group, a mercapto group and a ureido group, melt-kneading the mixture, then mixing the reaction mixture with (B) the aromatic group-containing oligomer, and melt-kneading the resulting mixture.
(28) The polyphenylene sulfide resin composition recited in the above-mentioned 1, which further comprises (E) from 0.05 to 1.5 parts by weight, per 100 parts by weight in total of (A) the polyphenylene sulfide resin and (B) the aromatic group-containing oligomer, of at least one additive (E) selected from (E-1) an ester compound composed of an aliphatic carboxylic acid having from 12 to 40 carbon atoms and a polyhydric alcohol, (E-2) an amide compound composed of an aliphatic monocarboxylic acid having from 12 to 40 carbon atoms and a diamine and (E-3) an amide compound composed of an aliphatic monocarboxylic acid having from 12 to 40 carbon atoms, an aliphatic polybasic acid having from 2 to 20 carbon atoms and an aliphatic diamine.
(29) The polyphenylene sulfide resin composition recited in the above-mentioned 1, which further comprises (F) from 0.01 to 5 parts by weight, per 100 parts by weight in total of (A) the polyphenylene sulfide resin and (B) the aromatic group-containing oligomer, of at least one metal salt selected from a carbonate, a halide, a sulfate, a nitrate, a phosphate, a phosphite, a hypophosphite and their double salt of at least one metal selected from lithium, sodium, potassium, magnesium, calcium, barium, iron, cobalt, nickel, copper, silver, zinc, aluminum and tin.
(30) The polyphenylene sulfide resin composition recited in the above-mentioned 1, wherein the crystallization peak temperature in temperature drop as measured by a differential scanning calorimeter (at a scanning rate of 20°C/min) is 230°C or higher.
(31) The polyphenylene sulfide resin composition recited in the above-mentioned 1, which is used for a molded article having a thin portion 2 mm or less in thickness.
(32) The polyphenylene sulfide resin composition recited in the above-mentioned 1, which is used for electrical and electronic parts.
(33) A process for producing the polyphenylene sulfide resin composition recited in the above-mentioned 27, which comprises mixing (A) the polyphenylene sulfide resin with (D) the alkoxysilane compound having at least one functional group selected from an epoxy group, an amino group, an isocyanate group, a hydroxyl group, a mercapto group and a ureido group, melt-kneading the mixture, then mixing the reaction mixture with (B) the aromatic group-containing oligomer, and melt-kneading the resulting mixture.
(34) A molded article which is formed by molding a polyphenylene sulfide resin composition comprising (A) from 99.9 to 80% by weight of a polyphenylene sulfide resin and (B) from 0.1 to 20% by weight of an aromatic group-containing oligomer, the crystallization peak temperature in temperature drop thereof being 125°C or lower.

### Brief Descriptions of the Drawings

Fig. 1 is a view illustrating a connector molded article formed in Examples. Fig. 1 a is a plan view thereof, and Fig. 1 b is a side view thereof.

### Best Mode of Carrying Out the Invention

The polyphenylene sulfide resin used in the present invention is a polymer containing a recurring unit (i) represented by the following structural formula, the amount of the recurring unit (i) being at least 70 mol%, especially preferably at least 90 mol% in view of the heat resistance. It is possible that the PPS resin can be composed of less than 30 mol%, based on the total amount of the recurring units, of the recurring unit (ii) represented by the following structural units.

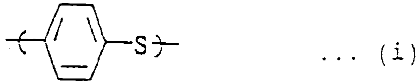

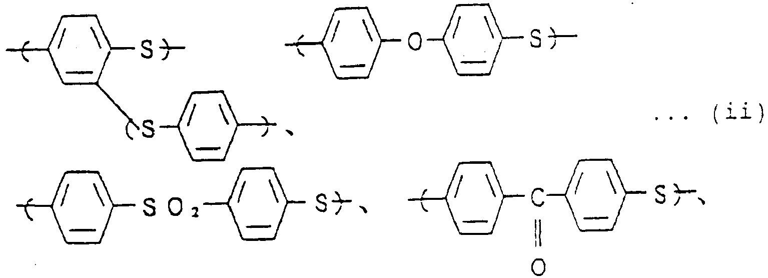

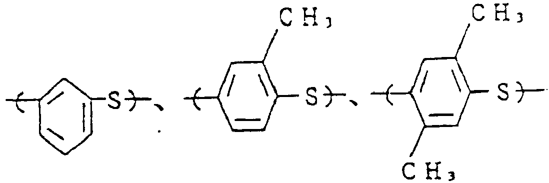

The melt viscosity of the PPS resin used in the present invention is not particularly limited if the PPS resin can be melt-kneaded. It is usually between 5 and 2,000 Pa•s (at 320°C and a shear rate of 1,000 sec-1), preferably between 10 and 200 Pa•s. For the PPS resin used in the present invention to have a superior flowability and a superior effect of burr reduction, a melt flow rate in 5-minute residence as prescribed in ASTM D1238-86 (at 315.5°C under a load of 5,000 g) is preferably at least 100 g/10 min, more preferably at least 250 g/min.

Such a PPS resin can be produced by a method of forming a polymer having a relatively low molecular weight as described in Japanese Patent Publication No. 3,368/1970 or a method of forming a polymer having a relatively high molecular weight as described in Japanese Patent Publication No. 12,240/1977 and Japanese Laid-Open (Kokai) No. 7,332/1986. In the present invention, the above-obtained PPS resin can of course be used by undergoing various treatments such as crosslinking through heating in air to provide a high molecular weight, heat treatment in an atmosphere of an inert gas such as nitrogen or under reduced pressure, washing with an organic solvent, hot water or an acid aqueous solution, activation with an acid anhydride, an amine, an isocyanate or a functional group-containing compound such as a functional group-containing disulfide compound, and so forth.

With respect to the crosslinking through heating of the PPS resin to provide a high molecular weight, a method can specifically be mentioned in which the heating is conducted at a predetermined temperature using a heater in an atmosphere of an oxidative gas such as air or oxygen or in an atmosphere of a mixed gas of the above-mentioned oxidative gas and an inert gas such as nitrogen or argon until a desired melt viscosity is obtained. The heat treatment temperature is usually between 170 and 280°C, preferably between 200 and 270°C. The time is usually between 0.5 and 100 hours, preferably between 2 and 50 hours. The intended viscosity level can be provided by controlling these two conditions. The heat treatment device may be an ordinary hot air drier, a rotary heater or a stirring blade-fitted heater. When the treatment is conducted at good efficiency and more uniformly, it is preferable to use a rotary heater or a stirring blade-fitted heater.

With respect to the heat-treatment of the PPS resin in an atmosphere of an inert gas such as nitrogen or under reduced pressure, a method can specifically be mentioned in which the heat treatment is conducted in an atmosphere of an inert gas such as nitrogen or under reduced pressure at a heat treatment temperature of from 150 to 280°C, preferably from 200 to 270°C for a heat treatment time of from 0.5 to 100 hours, preferably from 2 to 50 hours. The heat treatment device may be a hot air drier in which an atmosphere can be replaced with a highly sealable inert gas, a vacuum drier, a rotary heater or a stirring blade-fitted heater. When the treatment is conducted at good efficiency and more uniformly, it is preferable to use a rotary heater or a stirring blade-fitted heater.

A specific method of washing the PPS resin with an organic solvent is illustrated below. That is, the organic solvent used in the washing is not particularly limited unless it decomposes the PPS resin. Examples of the organic solvent include nitrogen-containing polar solvents such as N-methylpyrrolidone, dimethylformamide and dimethylacetamide; sulfoxide and sulfone solvents such as dimethyl sulfoxide and dimethylsulfone; ketone solvents such as acetone, methyl ethyl ketone, diethyl ketone and acetophenone; ether solvents such as dimethyl ether, dipropyl ether and tetrahydrofuran; halogen solvents such as chloroform, methylene chloride, trichloroethylene, dichloroethylene, dichloroethane, tetrachloroethane and chlorobenzene; and alcohol and phenol solvents such as methanol, ethanol, propanol, butanol, pentanol, ethylene glycol, propylene glycol, phenol, cresol and polyethylene glycol; and aromatic hydrocarbon solvents such as benzene, toluene and xylene. Of these organic solvents, N-methylpyrrolidone, acetone, dimethylformamide and chloroform are preferable. These organic solvents are used singly or in combination. With respect to the washing with the organic solvent, there is a method in which the PPS resin is dipped in the organic solvent. It is also possible to conduct stirring or heating as required. When the PPS resin is washed with the organic solvent, the washing temperature is not particularly limited, and any temperature can be selected within the range of from room temperature to 300°C. The higher the washing temperature, the higher the washing efficiency. A satisfactory effect can be obtained usually at the washing temperature of from room temperature to 150°C. Further, in order to remove the remaining organic solvent from the PPS resin washed with the organic solvent, it is advisable to wash the same with water or hot water several times.

A specific method of treating the PPS resin with hot water is illustrated below. That is, in order to exhibit a preferable effect of chemical modification of the PPS resin through washing with hot water, it is advisable that water used is distilled water or deionized water. The heat treatment procedure is conducted by charging a predetermined amount of the PPS resin into a predetermined amount of water, and heating and stirring the solution at a normal pressure or in a pressure container. With respect to the amounts of the PPS resin and water, it is preferable that the amount of water is larger. A bath ratio of 200 g or less of the PPS resin per liter of water is usually selected.

A specific method of treating the PPS resin with an acid is illustrated below. That is, there is a method in which the PPS resin is dipped in an acid or an acid aqueous solution. It is also possible to conduct stirring or heating as required. The acid used is not particularly limited unless it decomposes the PPS resin. Examples thereof include saturated aliphatic monocarboxylic acids such as formic acid, acetic acid, propionic acid and butyric acid; halo-substituted saturated aliphatic carboxylic acids such as chloroacetic acid and dichloroacetic acid; unsaturated aliphatic monocarboxylic acids such as acrylic acid and crotonic acid; aromatic carboxylic acids such as benzoic acid and salicylic acid; dicarboxylic acids such as oxalic acid, malonic acid, succinic acid, phthalic acid and fumaric acid; and inorganic acid compounds such as sulfuric acid, phosphoric acid, hydrochloric acid, carbonic acid and silicic acid. Of these, acetic acid and hydrochloric acid are preferable. In order to remove the remaining acid or salt from the PPS resin treated with the acid, it is advisable to wash the same with water or hot water several times. Water used in the washing is preferably distilled water or deionized water in order not to impair the preferable effect of the chemical modification of the PPS resin through the acid treatment.

With a view to obtaining a lower burr property and a flowability with a small thickness, it is preferable to use, as (A) the PPS resin of the present invention, a PPS resin mixture composed of (A1) from 5 to 90% by weight of a PPS resin having a number average molecular weight of from 7,000 to 15,000 as measured by gel permeation chromatography using 1-chloronaphthalene as a solvent and having a total ash content of 0.3% by weight or less, and (A2) from 95 to 10% by weight of a PPS resin being substantially free from a crosslinked structure and having a number average molecular weight of from 3,000 to 6,000% as measured in the above-mentioned manner. It is especially preferable to use, as (A1) the PPS resin, (A1-1) a PPS resin being substantially free from a crosslinked structure, having a number average molecular weight of from 7,000 to 15,000 as measured by gel permeation chromatography using 1-chloronaphthalene as a solvent and having a total ash content of 0.3% by weight or less, or (A1-2) a PPS resin having a crosslinked structure, having a number average molecular weight of from 7,000 to 15,000 as measured by gel permeation chromatography using 1-chloronaphthalene as a solvent and having a total ash content of 0.3% by weight or less, a melt flow rate in 15-minute residence as prescribed in ASTM D1238-86 (at 315.5°C under a load of 5,000 g) being between 50 and 95% of a melt flow rate in 5-minute residence. By the way, the total ash content is determined by charging 5 g of a resin dried at 150°C for 1 hour into a crucible, burning the same at 540°C for 6 hours, measuring the weight of the residue, and calculating a ratio of the weight of the residue relative to 5 g of the dried resin.

Further, with a view to providing a lower burr property and a higher moldability, it is preferable to use, as (A) the PPS resin, a PPS resin in which the crystallization peak temperature in temperature rise as measured by a differential scanning calorimeter at a scanning rate of 20°C/min is 135°C or lower and the crystallization peak temperature in temperature drop as measured in the above-mentioned manner is 210°C or higher.

Next, (B) the aromatic group-containing oligomer which is the essential component in the present invention is described below.

It is uncertain why the addition of (B) the aromatic group-containing oligomer exhibits the desired characteristics of the present invention. However, this oligomer having the aromatic ring and having the relatively low molecular weight presumably helps to provide the appropriate crystallization characteristics and the excellent dispersibility in the PPS resin.

Since the appropriate molecular weight of (B) the aromatic ring-containing oligomer varies depending on its chemical structure, it cannot generally be defined. However, it is advisable that at least the number average molecular weight is approximately 10,000 or less.

The appropriate crystallization characteristics of (B) the aromatic group-containing oligomer indicate that the crystallization peak temperature in temperature drop as measured by a differential scanning calorimeter at a scanning rate of 20°C/min is 240°C or higher, preferably between 250 and 340°C. For (B) the aromatic group-containing oligomer to be satisfactorily dispersed into the PPS resin, it is not desirable that the melting temperature of this oligomer is markedly higher than that of the PPS resin. In this sense, the melting peak temperature, as measured by a differential scanning calorimeter (at a scanning rate of 20°C/min), of (B) the aromatic group-containing oligomer is preferably 370°C or lower, more preferably 350°C or lower.

(B) The aromatic group-containing oligomer used in the present invention is preferably a polycondensate which is obtained through at least one linkage selected from an amide group, a hydrazide group, an imide group, an ester group, an ether group, a ketone group, a urethane group and a sulfone group, more preferably a polycondensate which is obtained through at least one linkage selected from an amide group, an ester group, a ketone group and an imide group.

As a preferable compound of (B) the aromatic group-containing oligomer used in the present invention, (B1) a semi-aromatic amide oligomer (meaning an amide oligomer containing an aromatic group in one part) composed of an aromatic group-containing divalent residue and an aromatic group-free divalent residue can be mentioned. (B1) The semi-aromatic amide oligomer is a polycondensate which contains one or more residues selected from the divalent residues represented by the following structural formulas (I), (II) and (III) and one or more residues selected from the divalent residues represented by the following structural formulas (IV), (V) and (VI), these residues being linked through an amide bond, and which has a relative viscosity (measured at 25°C in a 1-% sulfuric acid solution) of from 1.01 to 2.00.

-CO-R¹-CO- (I)

-NH-R²-NH- (II)

-NH-R³-CO- (III)

-CO-Ar¹-CO- (IV)

-NH-Ar²-NH- (V)

-NH-Ar³-CO- (VI)

wherein
R¹, R² and R³ each represent a divalent non-aromatic organic group having from 2 to 20 carbon atoms, and they may be the same or different, and
Ar¹, Ar² and Ar³ each represent a divalent aromatic group having from 6 to 20 carbon atoms, and they may be the same or different.

Usually, (B1) the semi-aromatic amide oligomer is derived from an aminocarboxylic acid, a lactam, or a diamine and a dicarboxylic acid.

The residue of the above-mentioned structural formula (I) is derived from a non-aromatic dicarboxylic acid having from 4 to 22 carbon atoms. Specific examples of the non-aromatic dicarboxylic acid having from 4 to 22 carbon atoms include succinic acid, glutaric acid, adipic acid, pimelic acid, azelaic acid, suberic acid, sebacic acid, dodecadioic acid, maleic acid, fumaric acid and cyclohexanedicarboxylic acid. They may be used either singly or in combination. Of these, adipic acid, sebacic acid and dodecadioic acid are especially preferable.

The residue of the above-mentioned structural formula (II) is derived from a non-aromatic diamine having from 2 to 20 carbon atoms. Specific examples of the non-aromatic diamine having from 2 to 20 carbon atoms include aliphatic and alicyclic diamines selected from ethylenediamine, propylenediamine, tetramethylenediamine, pentamethylenediamine, hexamethylenediamine, heptamethylenediamine, octamethylenediamine, nonamethylenediamine, decamethyl-enediamine, undecamethylenediamine, dodecamethylenediamine, tridecamethylenediamine, tetradecamethylenediamine, 2,2,4-trimethylhexamethylenediamine, 2,4,4-trimethylhexamethylenediamine,5-methyl-nonamethylenediamine, 1,3-bis(aminomethyl)cyclohexane, 1,4-bis(aminomethyl)cyclohexane, 1-amino-3-aminome-thyl-3,5,5-trimethylcyclohexane, 2,2-bis(4-aminocyclohexyl)propane, bis(aminopropyl)piperazine, bis(aminoethyl)piperazine, bis(4-aminocyclohexyl)methane and bis(3-methyl-4-aminocyclohexyl)methane. They may be used either singly or in combination. Of these, ethylenediamine, tetramethylenediamine, hexamethylenediamine and dodecamethylenediamine are especially preferable.

The residue of the above-mentioned formula (III) is derived from a non-aromatic carboxylic acid or lactam having from 3 to 21 carbon atoms. Specific examples of such a non-aromatic carboxylic acid or lactam having from 3 to 21 carbon atoms include aminocarboxylic acids such as 6-aminohexanoic acid, 7-aminoheptanoic acid, 8-aminooctanoic acid, 9-aminononanoic acid, 10-aminodecanoic acid and 11-aminoundecanoic acid, and lactams such as caprolactam, enantolactam and capryllactam. They may be used either singly or in combination. Of these, 6-aminohexanoic acid and caprolactam are especially preferable.

The residue of the above-mentioned formula (IV) is derived from an aromatic dicarboxylic acid having from 8 to 22 carbon atoms. Specific examples of such an aromatic dicarboxylic acid having from 8 to 22 carbon atoms include isophthalic acid, terephthalic acid, o-phthalic acid, 2-chloroterephthalic acid, 2-methylterephthalic acid, 5-methylisophthalic acid, 5-sodiumsulfoisophthalic acid, 4,4'-biphenyldicarboxylic acid, 3,4'-biphenyldicarboxylic acid, 2,2'-biphenyldicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 2,6-naphthalenedicarboxylic acid, 2,5-pyridinedicarboxylic acid and 2,4-pyridinedicarboxylic acid. They may be used either singly or in combination. Among these, isophthalic acid, terephthalic acid and o-phthalic acid are especially preferable.

The residue of the above-mentioned structural formula (V) is derived from a diamine containing an aromatic group having from 6 to 20 carbon atoms. Specific examples of such a diamine containing the aromatic group having from 2 to 20 carbon atoms include p-phenylenediamine, m-phenylenediamine, o-phenylenediamine, m-xylylenediamine, p-xylylenediamine, 2,3-diaminotoluene, 2,4-diaminotoluene, 2,6-diaminotoluene, 3,4-diaminotoluene, 1,5-diaminonaphthalene, 1,8-diaminonaphthalene and 2,3-diaminonaphthalene. They may be used either singly or in combination. Among these, p-phenylenediamine, m-phenylenediamine, m-xylylenediamine and p-xylylenediamine are especially preferable.

The residue of the above-mentioned structural formula (VI) is derived from an aromatic aminocarboxylic acid having from 7 to 21 carbon atoms. Specific examples of the aromatic aminocarboxylic acid having from 7 to 21 carbon atoms include p-aminobenzoic acid, m-aminobenzoic acid and o-aminobenzoic acid. They may be used either singly or in combination.

(B1) The semi-aromatic amine oligomer used in the present invention contains one or more residues selected from the divalent residues represented by the above-mentioned structural formulas (I), (II) and (III) and one or more residues selected from the divalent residues represented by the above-mentioned structural formulas (IV), (V) and (VI). Further, the multi-component co-oligomer containing three or more residues is especially preferable.

The structural ratio of the residues of the above-mentioned formulas (I) to (VI) in (B1) the semi-aromatic amide oligomer used in the present invention is not particularly limited. Ordinarily, the melting peak temperature is increased with the increase in the amount of the aromatic component. In (B1) the semi-aromatic amide oligomer used in the present invention, the melting peak temperature is preferably 270°C or higher, more preferably between 270 and 360°C, especially preferably between 270 and 330°C.

A preferable example of (B1) the semi-aromatic amide oligomer used in the present invention is a polycondensate obtained by linking the divalent residues represented by the above-mentioned structural formulas (I), (II) and (IV) through the amide bond. A specific example thereof includes an aromatic group-containing co-amide oligomer composed of a hexamethylenediamine residue, a terephthalic acid residue and an adipic acid residue or of a dodecamethylenediamine residue, a terephthalic acid residue, a hexamethylenediamine residue and an adipic acid residue. With respect to a preferable structural ratio, a (I)/(IV) molar ratio is (I)/(IV) = (80 to 5)/(20 to 95), preferably (I)/(IV) = (60 to 15)/(40 to 85). At this time, the molar ratio (II) is not particularly limited. It is usually between 0.5 and 1.5 mols based on the total molar amount of (I) and (IV).

Another preferable example of (B1) the semi-aromatic amide oligomer used in the present invention is a polycondensate obtained by linking the divalent residues represented by the above-mentioned structural formulas (II), (III) and (IV) through the amide bond. A specific example thereof includes an aromatic group-containing co-amide oligomer composed of a hexamethylenediamine residue, a terephthalic acid residue and a caprolactam residue or of a hexamethylenediamine residue, an isophthalic acid residue and a caprolactam residue. With respect to the preferable structural ratio thereof, a (II)/(IV) molar ratio is (II)/(IV) = (75 to 10)/(25 to 90). At this timer the molar ratio of (I I) is not particularly limited. Preferably, it is substantially equimolar with (IV).

Still another example, of (B1) the semi-aromatic amide oligomer used in the present invention is a polycondensate obtained by linking the residue of the above-mentioned structural formula (II) and at least two divalent residues of the above-mentioned structural formula (IV) through the amide bond. A specific example thereof includes an aromatic group-containing co-amide oligomer composed of a hexamethylenediamine residue, a terephthalic acid residue and an isophthalic acid residue.

(B1) The semi-aromatic amide oligomer used in the present invention may be an aromatic group-containing amide oligomer in which a part or substantially the whole of its end is capped with a monocarboxylic acid having from 1 to 20 carbon atoms and/or a monoamine having from 1 to 20 carbon atoms. Specific examples of the monocarboxylic acid having from 1 to 20 carbon atoms include acetic acid, propionic acid, butyric acid, valeric acid, caproic acid, caprylic acid, lauric acid, myristic acid, palmitic acid, stearic acid, oleic acid, cyclohexanecarboxylic acid, benzoic acid, toluic acid and phenylacetic acid. They may be used either singly or in combination.

Specific examples of the monoamine having from 1 to 20 carbon atoms include propylamine, butylamine, hexylamine, octylamine, nonylamine, decylamine, undecylamine, dodecylamine, octadecylamine, cyclohexylamine, benzylamine and β-phenetylamine. They may be used either singly or in combination.

A method of forming (B1) the semi-aromatic amide oligomer is not particularly limited. Examples thereof include a method in which desired monomers such as the above-mentioned aminocarboxylic acid, lactam, diamine and dicarboxylic acid or the salt of the diamine and the dicarboxylic acid and optionally the above-mentioned monocarboxylic acid and monoamine are charged into a pressurized reaction vessel in the form of a solid, a liquid or an aqueous solution, and heated without using a solvent or in the form of a solution containing a solvent such as water while being stirred, and a method in which the halogen compound of the above-mentioned dicarboxylic acid or monocarboxylic acid, or an ester compound thereof with a lower alcohol is used as a carboxylic acid starting material, and the heating is conducted in an organic solvent or in the absence of a solvent with stirring.

(B1) Such a semi-aromatic amide oligomer has to be an oligomer having a relative viscosity (measured at 25°C in a 1-% sulfuric acid solution) of from 1.01 to 2.00. The relative viscosity is preferably between 1.00 and 1.70, more preferably between 1.01 and 1.50, especially preferably between 1.10 and 1.50. A so-called aromatic group-containing polyamide which is used as engineering plastics is a polymer having usually a relative viscosity of 2.10 or more. Even if an aromatic group-containing amide polymer having a relative viscosity of more than 2.00 is used, it is difficult to obtain an effect of burr reduction, an effect of expediting crystallization and an effect of a good flowability which are intended by the present invention at the same time.

A further preferable compound of (B) the aromatic group-containing oligomer used in the present invention is (B2) a wholly aromatic amide oligomer which is a polycondensate obtained by linking the divalent residues represented by the following structural formulas (VII), (VIII) and (IX) and at least one organic residue selected from the end-capping groups represented by the following structural formulas (X) and (XI) through the amide bond.

-NH-Ar⁴-NH- (VII)

-NH-Ar⁵-CO- (VIII)

-CO-Ar⁶-CO- (IX)

wherein
Ar⁴, Ar⁵ and Ar⁶ each represent an organic group containing a divalent aromatic group having from 6 to 20 carbon atoms, and they may be the same or different.

   -NH-Ar⁷ (X)

   -CO-Ar⁸ (XI)
wherein
Ar⁷ and Ar⁸ each represent an organic group containing a monovalent aromatic group having from 6 to 20 carbon atoms, and they may be the same or different.

The above-mentioned Ar⁴ to Ar⁶ are each an organic group containing a divalent aromatic group having from 6 to 20 carbon atoms. Specific examples thereof include p-, m- or o-phenylene, 4,4'-, 3,4'- or 2,2'-biphenylene, 1,3-, 1,4-, 1,5-, 1,6-, 1,7- or 2,6-naphthalene, and 2,4 or 2,5-pyridine. They may be substituted with an aliphatic group having from 1 to 10 carbon atoms, an alicyclic group having from 4 to 20 carbon atoms, an aromatic group having from 6 to 20 carbon atoms, a halogen, a nitro group or a cyano group.

Further, Ar⁷ and Ar⁸ are each an organic group containing a monovalent aromatic group having from 6 to 20 carbon atoms. Specific examples thereof include phenyl, biphenyl, naphthalene and pyridine. They may be substituted with an aliphatic group having from 1 to 10 carbon atoms, an alicyclic group having from 4 to 20 carbon atoms, an aromatic group having from 6 to 20 carbon atoms, a halogen, a nitro group or a cyano group.

(B2) The wholly aromatic amide oligomer is usually derived from an aminocarboxylic acid or a diamine and a dicarboxylic acid or derivatives thereof.

The residue of the above-mentioned structural formula (VII) is derived from a diamine containing an aromatic group having from 6 to 20 carbon atoms. Specific examples of the aromatic diamine having from 6 to 20 carbon atoms include p-phenylenediamine, m-phenylenediamine, o-phenylenediamine, m-xylylenediamine, p-xylylenediamine, 2,3-diaminotoluene, 2,4-diaminotoluene, 2,6-diaminotoluene, 3,4-diaminotoluene, 1,5-diaminonaphthalene, 1,8-diaminonaphthalene and 2,3-diaminonaphthalene. They may be used either singly or in combination. Of these, p-phenylenediamine, m-phenylenediamine, m-xylylenediamine and p-xylylenediamine are especially preferable.

The residue of the above-mentioned structural formula (VIII) is derived from an aminocarboxylic acid containing an aromatic group having from 7 to 21 carbon atoms. Specific examples of the aminocarboxylic acid containing the aromatic group having from 7 to 21 carbon atoms include p-aminobenzoic acid, m-aminobenzoic acid and o-aminobenzoic acid. They may be used either singly or in combination.

The residue of the above-mentioned structural formula (IX) is derived from a dicarboxylic acid containing an aromatic group having from 8 to 22 carbon atoms. Specific examples of the aromatic dicarboxylic acid having from 8 to 22 carbon atoms include isophthalic acid, terephthalic acid, o-phthalic acid, 2-chloroterephthalic acid, 2-methylterephthalic acid, 5-methylisophthalic acid, 5-sodium sulfoisophthalic acid, 4,4'-biphenyldicarboxylic acid, 3,4'-biphenyldicarboxylic acid, 2,2'-biphenyldicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 2,6-naphthalenedicarboxylic acid, 2,5-pyridinedicarboxylic acid and 2,4-pyridinedicarboxylic acid. They may be used either singly or in combination. Of these, isophthalic acid, terephthalic acid and o-phthalic acid are especially preferable.

(B2) The wholly aromatic amide oligomer used in the present invention is a wholly aromatic amide oligomer in which a part or substantially the whole of the end is capped with a monoamine having from 6 to 20 carbon atoms and/or a monocarboxylic acid having from 7 to 21 carbon atoms.

Specific examples of the residue of the above-mentioned formula (X) include aniline, benzylamine and β-phenetylamine. They may be used either singly or in combination.

Specific examples of the residue of the above-mentioned structural formula (XI) include benzoic acid, toluic acid and phenylacetic acid. They may be used either singly or in combination.

A method of forming (B2) the wholly aromatic amide oligomer which is an essential component in the present invention is not particularly limited. Examples thereof include a method in which desired monomers such as the above-mentioned aminocarboxylic acid, diamine and dicarboxylic acid or the salt of the diamine and the dicarboxylic acid and optionally the above-mentioned monocarboxylic acid and monoamine are charged into a pressurized polymerization vessel in the form of a solid, a liquid or an aqueous solution, and heated without using a solvent or in the form of a solution containing a solvent such as water while being stirred, and a method in which the halogen compound of the above-mentioned dicarboxylic acid or monocarboxylic acid, or an ester compound thereof with a lower alcohol is used as a carboxylic acid starting material, and the heating is conducted in an organic solvent or in the absence of a solvent with stirring.

The molecular weight of (B2) such a wholly aromatic amide oligomer is preferably 2,000 or less, more preferably 1,000 or less.

In the present invention, the oligomeric polycondensate formed by the linking through the ester linkage is a preferable example of (B) the aromatic group-containing oligomer. A specific example of the aromatic group-containing ester oligomer is (B3) a wholly aromatic ester oligomer which is a polycondensate obtained by linking the divalent residues represented by the following structural formulas (XII), (XIII) and (XIV) and one or more organic residues selected from the monovalent residues represented by the following structural formulas (XV) nd (XVI).

-O-Ar⁹-O- (XII)

-O-Ar¹⁰-CO- (XIII)

-CO-Ar¹¹-CO- (XIV)

wherein
Ar⁹, Ar¹⁰ and Ar¹¹ each represent a divalent aromatic group-containing organic group having from 6 to 20 carbon atoms, and they may be the same or different.

-O-Ar¹² (XV)

-CO-Ar¹³ (XVI)

wherein
Ar¹² and Ar¹³ each represent an organic group containing a monovalent aromatic group having from 6 to 20 carbon atoms, and they may be the same or different.

The above-mentioned Ar⁹ to Ar¹¹ are each an organic group containing a divalent aromatic group having from 6 to 20 carbon atoms. Specific examples thereof include p-, m- or o-phenylene, 4,4'-, 3,4'- or 2,2'-biphenylene, 1,3-, 1,4-, 1,5-, 1,6-, 1,7- or 2,6-naphthalene, and 2,4- or 2,5-pyridine. They may be substituted with an aliphatic group having from 1 to 10 carbon atoms, an alicyclic group having from 4 to 20 carbon atoms, an aromatic group having from 6 to 20 carbon atoms, a halogen, a nitro group or a cyano group.

Further, Ar¹² and Ar¹³ are each an organic group containing a monovalent aromatic group having from 6 to 20 carbon atoms. Specific examples thereof include phenyl, biphenyl, naphthalene and pyridine. They may be substituted with an aliphatic group having from 1 to 10 carbon atoms, an alicyclic group having from 4 to 20 carbon atoms, an aromatic group having from 6 to 20 carbon atoms, a halogen, a nitro group or a cyano group.

(B3) The wholly aromatic ester oligomer is usually derived from a hydroxycarboxylic acid or a diol and a dicarboxylic acid or their derivatives.

The residue of the above-mentioned structural formula (XII) is derived from a diol containing an aromatic group having from 6 to 20 carbon atoms. Specific examples of the aromatic diol having from 6 to 20 carbon atoms include p-dihydroxybenzene, m-dihydroxybenzene, o-dihydroxybenzene, chlorohydroquinone, 4-chlororesorcinol, 1,5-dihydroxy-naphthalene, 2,6-dihydroxynaphthalene, 2,2'-dihydroxydiphenyl and 4,4'-dihydroxydiphenyl. They may be used either singly or in combination. Of these, p-dihydroxybenzene, 2,6-dihydroxynaphthalene and 2,2'-dihydroxydiphenyl are especially preferable.

The residue of the above-mentioned structural formula (XII I) is derived from a hydroxycarboxylic acid containing an aromatic group having from 7 to 21 carbon atoms. Specific examples of the aromatic hydroxycarboxylic acid having from 7 to 21 carbon atoms include p-hydroxybenzoic acid, m-hydroxybenzoic acid and o-hydroxybenzoic acid. They may be used either singly or in combination.

The residue of the above-mentioned structural formula (XIV) is derived from a dicarboxylic acid containing an aromatic group having from 8 to 22 carbon atoms. Specific examples of the aromatic dicarboxylic acid having from 8 to 22 carbon atoms include isophthalic acid, terephthalic acid, o-phthalic acid, 2-chloroterephthalic acid, 2-methylterephthalic acid, 5-methylisophthalic acid, 5-sodiumsulfoisophthalic acid, 4,4'-biphenyldicarboxylic acid, 3,4'-biphenyldicarboxylic acid, 2,2'-biphenyldicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 2,6-naphthalenedicarboxylic acid, 2,5-pyridinedicarboxylic acid and 2,4-pyridinedicarboxylic acid. They may be used either singly or in combination. Of these, isophthalic acid, terephthalic acid and o-phthalic acid are especially preferable.

(B) The aromatic group-containing oligomer used in the present invention may be an aromatic group-containing ester oligomer in which a part or substantially the whole of the end is capped with a monohydroxy having from 6 to 20 carbon atoms and/or a monocarboxylic acid having from 6 to 20 carbon atoms.

Specific examples of the residue of the above-mentioned structural formula (XV) include phenol, 1-naphthol and 2-naphthol. They may be used either singly or in combination.

Specific examples of the residue of the above-mentioned structural formula (XVI) include benzoic acid, toluic acid and phenylacetic acid. They may be used either singly or in combination.

A method of forming (B3) such a wholly aromatic ester oligomer is not particularly limited. It includes a method in which the above-mentioned hydroxy group is esterified with acetic anhydride, another monomer is then added to the esterified monomer, and the mixture is heat-treated under high vacuum to conduct polycondensation, and a method in which interfacial polycondensation is conducted at a low temperature using a halogen compound of the above-mentioned dicarboxylic acid or monocarboxylic acid as a carboxylic acid starting material.

The molecular weight of (B3) the wholly aromatic ester oligomer is preferably 2,000 or less, more preferably 1,000 or less.

In the present invention, an oligomeric compound having one or more aromatic groups and one or more ketone groups in a molecule is also a preferable example of (B) the aromatic group-containing oligomer.

A specific example of (B4) the aromatic ketone oligomer is an aromatic ketone oligomer which is a polycondensate obtained by linking one or more residues represented by the following structural formulas (XVII), (XVIII) and (XIX) through a ketone group.

X¹-CO-[Ar¹⁴-CO]a-X² (XVII)

wherein
Ar¹⁴ represents a divalent aromatic organic group having from 6 to 20 carbon atoms,
X¹ and X² each represent a monovalent aromatic organic group having from 6 to 20 carbon atoms, and they may be the same or different, and
a represents an integer of from 1 to 18.

   X³-CO-[Ar¹⁵-CO-Ar¹⁶-O]b-X⁴ (XVIII)

   wherein
Ar¹⁵ and Ar¹⁶ each represent a divalent aromatic organic group having from 6 to 20 carbon atoms, and they may be the same or different,
X³ and X⁴ each represent a monovalent aromatic organic group having from 6 to 20 carbon atoms, and they may be the same or different, and
b represents an integer of from 1 to 9.

   X⁵-CO-[Ar¹⁷-CO-Ar¹⁸-O-Ar¹⁹-O]c-X⁶ (XIX)

   wherein
Ar¹⁷, Ar¹⁸ and Ar¹⁹ each represent a divalent aromatic organic group having from 6 to 20 carbon atoms, and they may be the same or different,
X⁵ and X⁶ each represent a monovalent aromatic organic group having from 6 to 20 carbon atoms, and they may be the same or different, and
c represents an integer of from 1 to 6.

The above-mentioned Ar¹⁴ to Ar¹⁹ are each a divalent aromatic organic group having from 6 to 20 carbon atoms. Specific examples thereof include p-, m- or o-phenylene, 4,4'-, 3,4'- or 2,2'-biphenylene, 1,3-, 1,4-, 1,5-, 1,6-, 1,7- or 2,6-naphthalene, and 2,4- or 2,5-pyridine. They may be substituted with an aliphatic group having from 1 to 10 carbon atoms, an alicyclic group having from 4 to 20 carbon atoms or an aromatic group having from 6 to 20 carbon atoms.

Further, X¹ to X⁶ are each a divalent aromatic organic group having from 6 to 20 carbon atoms. Specific examples thereof include phenyl, biphenyl, naphthalene, pyridine and these groups substituted with alkyl or halogen. They may be substituted with an aliphatic group having from 1 to 10 carbon atoms, an alicyclic group having from 4 to 20 carbon atoms or an aromatic group having from 6 to 20 carbon atoms.

The molecular weight of (B4) the aromatic ketone oligomer is preferably 2,000 or less, more preferably 1,000 or less.

In the present invention, an oligomeric compound having one or more aromatic groups and one or more imide groups in a molecule is also a preferable example of (B) the aromatic group-containing oligomer.

A specific example of (B5) the aromatic imide oligomer is an aromatic imide oligomer which is a polycondensate obtained by the linking through an imide group represented by the following structural formula. 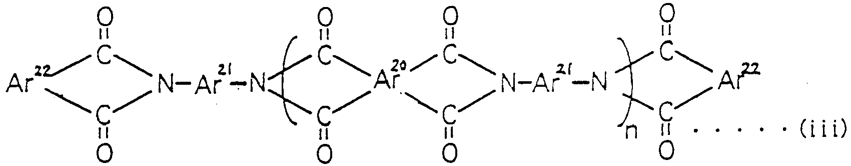 wherein
Ar²⁰ represents an aromatic tetracarboxylic acid residue,
Ar²¹ represents an aromatic diamine residue,
Ar²² represents an acid anhydride residue, and
n is an integer of from 0 to 5.

Such an aromatic imide oligomer can be formed by the reaction between an aromatic tetracarboxylic acid and an aromatic diamine.

Examples of the aromatic tetracarboxylic acid include 3,3',4,4'-benzophenonetetracarboxylic acid, pyromellitic acid, 2,3,6,7-naphthalenetetracarboxylic acid, 3,3',4,4'-diphenyltetracarboxylic acid, 2,2',3,3'-diphenyltetracarboxylicacid, bis(3,4-dicarboxyphenyl)ether, bis(3,4-dicarboxyphenyl)methane, bis(3,4-dicarboxyphenyl)sulfone, and anhydrides and halides thereof. An aromatic tricarboxylic acid having from 8 to 22 carbon atoms or an aromatic dicarboxylic acid may be used in combination with the aromatic tetracarboxylic acid. Specific examples of the aromatic tricarboxylic acid having from 8 to 22 carbon atoms and the aromatic dicarboxylic acid include trimellitic acid, isophthalic acid, terephthalic acid, o-phthalic acid, 2-chloroterephthalic acid, 2-methylterephthalic acid, 5-methylisophthalic acid, 5-sodiumsul-foisophthalicacid, 4,4'-biphenyldicarboxylic acid, 3,4'-biphenyldicarboxylic acid, 2,2'-biphenyldicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 2,6-naphthalenedicarboxylic acid, 2,5-pyridinedicarboxylic acid, 2,4-pyridinedicarboxylic acid, and halides thereof.

Examples of the aromatic diamine include 2,2'-bis(4-aminophenoxydiphenyl)propane, 1,3-bis(3-aminophenoxy)benzene, 1,4-bis(4-aminophenoxy)benzene, 4,4'-bis(4-aminophenoxy)diphenyl, p-phenylenediamine, m-phenylenediamine, 3,3'-diaminodiphenylmethane, 3,3'-oxydianiline, 4,4'-diaminodiphenylmethane, 3,3'-diaminodiphenyl sulfide, 4,4'-diaminodiphenyl sulfide, 3,3'-diaminodiphenylsulfone, 4,4'-diaminodiphenyl sulfone, 3,3'-diaminodiphenyl ether, 4,4'-diaminodiphenyl ether, 1,5-diaminonaphthalene, 2,6-diaminonaphthalene, n-xylylenediamine, n-toluylenediamine, tolidine base, n-aminobenzylamine and p-aminobenzylamine. Examples of the acid anhydrides include cyclohexane-1,2-dicarboxylic anhydride, phthalic anhydride, and alkyl substituted compounds and halo-substituted compounds thereof.

The molecular weight of (B5) the aromatic imide oligomer is preferably 2,000 or less, preferably 1,000 or less.

With respect to the amount of (B) the aromatic group-containing oligomer in the present invention, the range of (A) polyphenylene sulfide resin/(B) aromatic group-containing oligomer = 99.9 to 80/0.1 to 20% by weight is selected, the range of (A) polyphenylene sulfide resin/(B) aromatic group-containing oligomer = 99.9 to 93/0.1 to 7% by weight is preferably selected, and the range of (A) polyphenylene sulfide resin/(B) aromatic group-containing oligomer = 99.9 to 95/0.1 to 5% by weight is more preferably selected. When the amount of (B) the aromatic group-containing oligomer is less than 0.1% by weight, no satisfactory effect of burr reduction is exhibited. Meanwhile, when it exceeds 20% by weight, a decrease in the strength occurs notably. Thus, it is undesirable.

In the present invention, in order to improve a strength, a dimensional stability and the like, a fibrous filler and/or a non-fibrous filler is used as (C) the filler, as required. Specific examples of (C) the filler include fibrous fillers such as a glass fiber, a glass milled fiber, a carbon fiber, a potassium titanate whisker, a zinc oxide whisker, an aluminum borate whisker, an alamide fiber, an alumina fiber, a silicon carbide fiber, a ceramic fiber, an asbestos fiber, a gypsum fiber and a metallic fiber; and non-fibrous fillers such as silicates, for example, wollastonite, zeolite, sericite, kaolin, mica, clay, pyrophyllite, bentonite, asbestos, talc and aluminosilicate, metal compounds, for example, alumina, silicon oxide, magnesium oxide, zirconium oxide, titanium oxide and iron oxide, carbonates, for example, calcium carbonate, magnesium carbonate and dolomite, sulfates, for example, calcium sulfate and barium sulfate, and hydroxides, for example, magnesium hydroxide, calcium hydroxide and aluminum hydroxide, a glass bead, a ceramic bead, boron nitride, silicon carbide and silica. These may be hollow, and may be used either singly or in combination. With a view to providing a higher mechanical strength, it is preferable that (C) the filler is used by being preliminarily treated with a coupling agent such as an isocyanate compound, an organic silane compound, an organic titanate compound, an organic boron compound or an epoxy compound.

Among others, (C) the filler is preferably (C-1) the glass fiber in order to obtain a resin composition which is superior in the melt flowability and the dispersibility of the aromatic group-containing oligomer.

The diameter of (C-1) such a glass fiber is preferably at least 8 µm and at most 15 µm in order to obtain a resin composition which is excellent in the balance of the melt flowability and the burr reduction. Further, with a view to obtaining a resin composition which is superior in the dispersibility of the aromatic group-containing oligomer, the length of (D-1) the glass fiber is 400 µm or less on the weight average in the polyphenylene sulfide resin composition.

With respect to the amount of (C) the filler, the range of from 10 to 400 parts by weight per 100 parts by weight in total of (A) the PPS resin and (B) the aromatic group-containing oligomer is selected. Further, in order to obtain a resin composition which is superior in the balance of the melt flowability and the mechanical strength, the range of from 25 to 250 parts by weight per 100 parts by weight in total of (A) the PPS resin and (B) the aromatic group-containing oligomer is selected.

In the present invention, for improving the strength and providing the superior effect of burr reduction, (D) the alkoxysilane compound having at least one functional group selected from an epoxy group, an amino group, an isocyanate group, a hydroxyl group, a mercapto group and a ureido group is used as required. Specific examples of the alkoxysilane compound include epoxy group-containing alkoxysilane compound such as γ-glycidoxypropyltrimethoxysilane, γ-glycidoxypropyltriethoxysilane and β-(3,4-epoxycyclohexyl)ethyltrimethoxysilane; mercapto group-containing alkoxysilane compounds such as γ-mercaptopropyltrimethoxysilane and γ-mercaptopropyltriethoxysilane; ureido group-containing alkoxysilane compounds such as γ-ureidopropyltriethoxysilane, γ-ureidopropyltrimethoxysilane and γ-(2-ureidoethyl)aminopropyltrimethoxysilane; isocyanato group-containing alkoxysilane compounds such as γ-isocyanatopropyltriethoxysilane, γ-isocyanatopropyltrimethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, and γ-isocyanatopropyltrichlorosilane; amino group-containing alkoxysilane compounds such as γ-(2-aminoethyl)aminopropylmethyldimethoxysilane, γ-(2-aminoethyl)aminopropyltrimethoxysilane and γ-aminopropyltrimethoxysilane; and hydroxyl group-containing alkoxysilane compounds such as γ-hydroxypropyltrimethoxysilane and γ-hydroxypropyltri-ethoxysilane. Of these, especially preferable are the epoxy group-containing alkoxysilane compounds such as γ-glycidoxypropyltrimethoxysilane, γ-glycidoxypropyltriethoxysilane and β-(3,4-epoxycyclohexyl)ethyltrimethoxysilane, the ureido group-containing alkoxysilane compounds such as γ-ureidopropyltriethoxysilane, γ-ureidopropyltrimethoxysilane and γ-(2-ureidoethyl)aminopropyltrimethoxysilane, the amino group-containing alkoxysilane compounds such as γ-(2-aminoethyl)aminopropylmethyldimethoxysilane, γ-(2-aminoethyl)aminopropyltrimethoxysilane and γ-aminopropyltrimethoxysilane, and the isocyanato group-containing alkoxysilane compounds such as γ-isocyanatopropyltriethoxysilane, γ-isocyanatopropyitrimethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane and γ-isocyanatopropyltrichlorosilane.

(D) The alkoxysilane compound is used for providing a superior mechanical strength and a superior effect of burr reduction. With respect to the amount thereof, the range of from 0.1 to 5 parts by weight per 100 parts by weight in total of (A) the PPS resin and (B) the aromatic group-containing oligomer is selected, and the range of from 0.2 to 3 parts by weight is selected preferably.

In the present invention, in order to provide a superior effect of burr reduction and an excellent mold releasability, it is effective to add at least one additive (E) selected from (E-1) an ester compound composed of an aliphatic carboxylic acid having from 12 to 40 carbon atoms and a polyhydric alcohol, (E-2) an amide compound composed of an aliphatic monocarboxylic acid having from 12 to 40 carbon atoms and a diamine and (E-3) an amide compound composed of an aliphatic monocarboxylic acid having from 12 to 40 carbon atoms, an aliphatic polybasic acid having from 2 to 20 carbon atoms and an aliphatic diamine. Of these, (E-3) the amide compound composed of the aliphatic monocarboxylic acid having from 12 to 40 carbon atoms, the aliphatic polybasic acid having from 2 to 20 carbon atoms and the aliphatic diamine is especially effective because a superior effect of burr reduction is provided.

In (E-1) the ester compound composed of the aliphatic carboxylic acid having from 12 to 40 carbon atoms and the polybasic alcohol, specific examples of the aliphatic carboxylic acid having from 12 to 40 carbon atoms include stearic acid, oleic acid, palmitic acid, lauric acid and montanic acid. Examples of the polyhydric alcohol include ethylene glycol, 1,2-propanediol, 1,3-propanediol, 1,4-butanediol, 1,6-hexanediol, 2-ethyl-1,3-hexanediol, glycerin, trimethylolpropane, pentaerythritol and polypentaerythritol.

In (E-2) the amide compound composed of the aliphatic monocarboxylic acid having from 12 to 40 carbon atoms and the diamine, specific examples of the aliphatic monocarboxylic acid having from 12 to 40 carbon atoms include the same as those in (E-1). Specific examples of the diamine include ethylenediamine, 1,3-diaminopropane, 1,4-diamino-propane, hexamethylenediamine, m-xylyienediamine, tolylenediamine, p-xylyienediamine, phenylenediamine and iso-phorononediamine.

In (E-3) the amide compound composed of the aliphatic monocarboxylic acid having from 12 to 40 carbon atoms, the aliphatic polybasic acid having from 2 to 20 carbon atoms and the aliphatic diamine, specific examples of the aliphatic monocarboxylic acid having from 12 to 40 carbon atoms include the same as those in (E-1). Specific examples of the aliphatic diamine include ethylenediamine, 1,3-diaminopropane, 1,4-diaminopropane and hexamethylenediamine. The polybasic acid refers to a dibasic or higher carboxylic acid. Specific examples thereof include malonic acid, succinic acid, adipic acid, pymeric acid, azelaic acid, sebacic acid, phthalic acid, isophthalic acid, terephthalic acid, cyclohexanedicarboxylic acid and cyclohexylsuccinic acid. Such an amide compound can be synthesized by a method in which an aliphatic monocarboxylic acid and an aliphatic polybasic acid as starting materials are heat-reacted along with the aliphatic diamine at from 180 to 300°C, preferably at from 200 to 270°C.

The amount of at least one additive selected from (E-1) the ester compound composed of the aliphatic carboxylic acid having from 12 to 40 carbon atoms and the polybasic alcohol, (E-2) the amide compound composed of the aliphatic monocarboxylic acid having from 12 to 40 carbon atoms and the diamine compound or (E-3) the amide compound composed of the aliphatic monocarboxylic acid having from 12 to 40 carbon atoms and the aliphatic polybasic acid having from 2 to 20 carbon atoms is preferably between 0.05 and 1.5 parts by weight, especially preferably between 0.1 and 1.0 part by weight per 100 parts by weight in total of (A) the PPS resin and (B) the aromatic group-containing oligomer in view of the effect of burr reduction and the mechanical strength. When using two or more of (E-1), (E-2) and (E-3), the total amount thereof is preferably within the above-mentioned range.

In the present invention, with a view to providing a superior effect of burr reduction, it is advisable to further add at least one metal salt selected from a carbonate, a sulfate, a nitrate, a halide, a phosphate, a phosphite, a hypophosphite and their double salt of at least one metal selected from lithium, sodium, potassium, magnesium, calcium, barium, iron, cobalt, nickel, copper, silver, zinc, aluminum and tin. Carbonates such as sodium carbonate, lithium carbonate, potassium carbonate, zinc carbonate, magnesium carbonate, calcium carbonate and barium carbonate, and phosphates, phosphites and hypophosphites such as potassium phosphate, magnesium phosphate, calcium phosphite, magnesium phosphite, calcium hypophosphite and magnesium hypophosphite are especially preferable.

It is advisable to add such a metal salt in an amount of from 0.01 to 5 parts by weight per 100 parts by weight in total of (A) the polyphenylene sulfide resin and (B) the aromatic group-containing oligomer in view of the effect of burr reduction, the strength and the flowability.

The PPS resin composition of the present invention can contain ordinary additives unless impairing the effects of the present invention. Examples thereof include a plasticizer such as a polyalkylene oxide oligomer compound, a thioether compound, an ester compound or an organic phosphorus compound, a nucleating agent such as talc, kaolin, an organic phosphorus compound or polyether ether ketone, a coloration preventing agent such as a hypophosphite, an oxidation preventing agent, a heat stabilizer, a lubricant, an ultraviolet inhibitor, a colorant, a fire retardant and a foaming agent. Further, the PPS resin composition of the present invention may contain resins unless impairing the effects of the present invention. Examples thereof include polyester, polysulfone, polyethylene tetrafluoride, polyetherimide, polyamide-imide, polyamide, polyimide, polycarbonate, polyether sulfone, polyether ketone, polythioether ketone, polyether ether ketone, an epoxy resin, a phenol resin, polyethylene, polystyrene, polypropylene, an ABS resin, a polyamide elastomer, a polyester elastomer, a polyalkylene oxide and an olefinic copolymer containing an acid anhydride group, a carboxyl group or an epoxy group.

A process for producing the PPS resin composition in the present invention is not particularly limited. For example, a typical process can be mentioned in which a starting mixture is fed to a single screw extruder or a twin-screw extruder and a known melt mixer such as a Banbury mixer, a kneader or a mixing roll to knead the same at a temperature of from 280 to 380°C. The order of mixing the starting materials is not particularly limited. There are a method in which all of the starting materials are mixed and then melt-kneaded by the above-mentioned method, a method in which a part of the starting materials are mixed and then melt-kneaded by the above-mentioned method, after which the remaining starting materials are mixed and melt-kneaded, and a method in which a part of the starting materials are mixed and the remaining starting materials are then mixed using a side feeder during the melt-kneading by means of a single screw extruder or a twin-screw extruder. Any of these methods can be employed. It is of course possible to add the additives in small amounts before the molding, after the other components are kneaded and pelletized by the above-mentioned method and then to mold the mixture.

When using (D) the alkoxysilane compound having at least one functional group selected from an epoxy group, an amino group, an isocyanate group, a hydroxyl group, a mercapto group and a ureido group, it is advisable, for providing a superior effect of burr reduction, that (A) the PPS resin is mixed and melt-kneaded with (D) the alkoxysilane compound having at least one functional group selected from an epoxy group, an amino group, an isocyanate group, a hydroxyl group, a mercapto group and a ureido group, and the mixture is further mixed and melt-kneaded with (B) the aromatic group-containing oligomer. At this time, the components other than (A) the PPS resin, (D) the alkoxysilane compound having at least one functional group selected from an epoxy group, an amino group, an isocyanate group, a hydroxyl group, a mercapto group and a ureido group and (B) the aromatic group-containing oligomer may be mixed and melt-kneaded with (A) the PPS resin and (D) the alkoxysilane compound having at least one functional group selected from an epoxy group, an amino group, an isocyanate group, a hydroxyl group, a mercapto group and a ureido group, or may be mixed and melt-kneaded with (B) the aromatic group-containing oligomer.

In the melt-kneading method, it is possible, for example, that the melt-kneading is conducted twice with a single screw extruder or a twin-screw extruder, or the mixture of (A) the PPS resin and (D) the alkoxysilane compound having at least one functional group selected from an epoxy group, an amino group, an isocyanate group, a hydroxyl group, a mercapto group and a ureido group is charged from a main hopper and melt-kneaded, and (B) the aromatic group-containing oligomer is fed from a side feeder or the like during the melt-kneading and the mixture is melt-kneaded.

In order to achieve the object of the present invention, namely, the excellent effect of burr reduction, the excellent flowability and the excellent crystallization characteristics at the same time, the crystallization peak temperature in temperature rise, as measured by a differential scanning calorimeter (at a scanning rate of 20°C/min), of the PPS resin composition containing (A) the PPS resin and (B) the aromatic group-containing oligomer has to be 250°C or lower, and it is preferably 120°C or lower. Further, the crystallization peak temperature in temperature drop is preferably 230°C or higher. In order to achieve the object of the present invention, the above-mentioned appropriate designing of the chemical structure of (B) the aromatic group-containing oligomer and the adjustment of the molecular weight are required for the PPS resin composition to have such crystallization characteristics. Further, with respect to (A) the PPS resin, the above-mentioned appropriate selection is preferable. Incidentally, the crystallization peak temperature in temperature rise and the crystallization peak temperature in temperature drop of the PPS resin composition are measured by the following method. That is, the pellets or the molded article of the PPS resin composition was pressed at 340°C for 4 minutes using a hot press, and quenched in water to obtain an amorphous sheet having a thickness of approximately 20 µm. Approximately 10 mg of this sheet were cut to form a measuring sample. The measurement was conducted using a DSC-7 of Perkin-Elmer. Two-point calibration (indium, lead) and correction of a base line were carried out. Then, the temperature was elevated from 40°C at a rate of 20°C/min. The sample was maintained at 340°C for 1 minute, and then heated at a rate of 20°C/min. The crystallization peak temperatures which were observed in temperature rise and temperature drop were measured.

The PPS resin composition of the present invention is one which is superior in the effect of burr reduction, the crystallization characteristics and the flowability without much impairing the heat stability and electric characteristics inherent in the PPS resin composition.

The thus-obtained PPS resin composition can be applied to various known moldings such as extrusion-molding, compression-molding, blow-molding and injection-molding. Especially, thia resin composition is appropriate for the injection-molding.

The polyphenylene sulfide resin composition of the present invention is especially useful when producing a molded article having a thin portion, especially a thin portion having a thickness of 2 mm or less upon making use of its excellent flowability, effect of burr reduction and crystallization characteristics.

The molded article of the PPS resin composition in the present invention is especially suitable for electrical and electronic parts such as a connector and a coil. It is also suitable for other electronic parts typified by a sensor, an LED lamp, a socket, a resistor, a relay case, a miniature switch, a coil bobbin, a condenser, a variable condenser case, a light pickup, an oscillator, various terminal boards, a transformer, a plug, a print board, a tuner, a speaker, a microphone, a headphone, a miniature motor, a magnetic head base, a power module, a semiconductor, a liquid crystal, an FDD carriage, an FEE chassis, a motor brush holder, a parabola antenna, and computer parts; parts of an electrical equipment such as a generator, an electric motor, a transformer, a converter, a voltage regulator, a rectifier, an invertor, a relay, a power contact, a switch, a breaker, a knife switch, a multipolar rod and an electrical component cabinet; parts of domestic and office electrical products typified by VTR parts, parts of television set, an iron, a hair drier, parts of a rice cooker, parts of an electronic oven, acoustic parts, parts of a sound equipment such as an audio laser disc and a compact disc, parts of a lighting equipment, refrigerator parts, air conditioner parts, typewriter parts and parts of word processor; parts of machines typified by office computer parts, telephone parts, facsimile parts, copier parts, washing jigs motor parts, writers and typewriters; parts of an optical equipment and a precision machine typified by a microscope, a binocular, a camera and watch; and automobile and vehicle parts typified by an alternator terminal, an alternator connector, an IC regulator, various valves such as an exhaust gas valve, various pipes of fuel, exhaust and suction systems, an air intake nozzle snorkel, an intake manifold, a fuel pump, an engine cooling water joint, a carburetor main body, a carburetor spacer, an exhaust gas sensor, a cooling water sensor, an oil temperature sensor, a brake pad weather sensor, a throttle position sensor, a crankshaft position sensor, an air flow meter, a brake pad wear sensor, a thermostat base for an air conditioner, a hot water flow control valve, a brush holder for a radiator motor, a water pump impeller, a turbine vane, wiper motor parts, a distributor, a starter switch, a starter relay, a transmission wire harness, a wind washer nozzle, an air conditioner panel switch substrate, a coil for a fuel-associated electromagnetic valve, a fuse connector, a horn terminal, an insulating plate for an electrical equipment, a step motor rotor, a lamp socket, a lamp reflector, a lamp housing, a brake piston, a solenoid bobbin, an engine oil filter and a case of an ignition device.

### Examples

The present invention is illustrated more specifically by referring to the following Examples.

Experimental methods:

### (1) Measurement of crystallization characteristics of PPS

The PPS powder or pellets obtained by the following method were pressed at 340°C for 4 minutes using a hot press, and then quenched in water to obtain an amorphous sheet having a thickness or approximately 20 µm. Approximately 10 mg of this sheet were cut to form a measuring sample. The measurement was conducted using a DSC-7 of Perkin-Elmer. Two-point calibration (indium, lead) and correction of a base line were carried out. Then, the temperature was elevated from 40°C at a rate of 20°C/min. The sample was maintained at 340°C for 1 minute, and then cooled at a rate of 20°C/min. The crystallization peak temperatures which were observed in temperature rise and temperature drop were measured. It means that the lower the crystallization peak temperature in temperature rise, the crystallization proceeds faster, and that the higher the crystallization peak temperature in temperature drop, the crystallization proceeds faster.

### (2) Measurement of the length of burr:

A connector molded article which had two rows each provided with 50 pinholes (at an interval of 1.27 mm), which had a box shape with an inner size of 68 mm x 5 mm x 7 mm (height) and an outer size of 70 mm x 7 mm x 9.3 mm (height) and which was provided on both longitudinal ends with ribs was formed using a PS20E2ASE molding machine manufactured by Nissei Jushi Kogyo K.K.

Fig. 1a is a plan view of such a connector molded article. Fig. 1b is a side view thereof. The connector has 50 pinholes in each row. An arrow 2 indicates a gate position.

The molding was conducted at a mold temperature of 135°C and a resin temperature of 320°C. First, the lowest injection pressure (lower limit of the molding pressure) at which the resin was filled into the end was calculated. The molding was conducted at an injection pressure of this pressure plus 3 kgf/cm² (gauge pressure). The lengths of burrs that occurred on the pinholes (the 3rd, 9th, 18th, 28th, 38th and 48th pinholes counted from the gate in the row situated on the upper side when the opening portion of the box was put on the upper portion and the gate was placed on the left) were measured from the upper side of Fig. 1b using a universal projector, and the average value was calculated.

### (3) Measurement through gel permeation chromatography:

The number average molecular weight was measured according to the method described in Collection of Theses on High Polymer, vol. 44 (1987), February, pp. 139 - 141 by means of a device manufactured by Waters (GPC-244) using a column, Shodex K-80M (manufactured by Showa Denko K.K.), 1-chloronaphthalene as a solvent, a hydrogen flame ionization detector and 6 types of monodisperse polystyrenes in calibration.

### (4) Measurement of a relative viscosity of (B1) a semi-aromatic amide oligomer:

According to JIS K6810, 1 g of a sample was weighed, and dissolved in 100 ml of 98% conc. sulfuric acid. A relative viscosity of the solution was measured at 25°C.

### (5) Measurement of a melt peak temperature and crystallization characteristics of the aromatic group-containing oligomer:

The measurement was conducted using a DSC-7 manufactured by Perkin-Elmer. A temperature (T) showing the maximum value of a melting curve was first measured by heating from 8 to 10 mg of the sample at a rate of temperature rise of 20°C/min. Then, the sample was formed again, and the temperature was elevated to T + 20°C at a rate of 20°C/min. The sample was retained at that temperature for 5 minutes, and then cooled to 30°C at a rate of temperature drop of 20°C/min. The sample was retained at 30°C for 5 minutes, and the temperature was then elevated again at a rate of 20°C/min. At that time, the maximum value of the melting curve was defined as a melting peak temperature.

Subsequently, the temperature was elevated to T + 20°C, and the sample was retained at that temperature for 1 minute. This sample was then cooled at a rate of temperature drop of 20°C/min. The crystallization heat generation peak temperature was defined as a crystallization temperature in temperature drop. It means that the higher the crystallization temperature in temperature drop, the faster the crystallization occurs.

### Reference Example 1

### (Polymerization of a PPS resin)

### (1) A-1

An autoclave fitted with a stirrer was charged with 6.005 kg (25 mols) of sodium nitride 9-hydrate, 0.205 kg (2.5 mols) of sodium acetate and 5 kg of N-methyl-2-pyrolidone (hereinafter abbreviated as "NMP"). The temperature was gradually elevated up to 205°C while passing nitrogen distill off 3.6 liters of water. Subsequently, the reaction vessel was cooled to 180°C, and 3.719 kg (25.3 mols) of 1,4-dichlorobenzene and 3.7 kg of NMP were added thereto. The reaction vessel was sealed in an atmosphere of nitrogen, and the temperature was elevated up to 270°C. The reaction was then conducted at 270°C for 2.5 hours. After the reaction mixture was cooled, the reaction product was washed five times with hot water, and then charged into 10 kg of NMP heated at 100°C. The mixture was stirred for approximately 1 hour, then filtered, and further washed several times with hot water. The resulting product was charged into 25 liters of an acetic acid aqueous solution of pH 4 heated at 90°C, stirred for approximately 1 hour, and then filtered. The filtrate was washed with deionized water of approximately 90°C until the pH of the filtrate reached 7, and was then dried under reduced pressure at 80°C for 24 hours to obtain 2.43 kg of PPS. This PPS was linear, and had a number average molecular weight of 9,200, a total ash content of 0.07% by weight, a melt flow rate of 580 g/10 min, a crystallization temperature in temperature rise of 127.3°C and a crystallization temperature in temperature drop of 232.4°C.

### (2) A-2

An autoclave fitted with a stirrer was charged with 6.005 kg (25 mols) of sodium nitride 9-hydrate, 0.184 kg (2.25 mols) of sodium acetate and 5 kg of N-methyl-2-pyrolidone (hereinafter abbreviated as "NMP"). The temperature was gradually elevated up to 205°C while passing nitrogen to distill off 3.6 liters of water. Subsequently, the reaction vessel was cooled to 180°C, and 3.756 kg (25.55 mols) of 1,4-dichlorobenzene and 3.7 kg of NMP were added thereto. The reaction vessel was sealed in an atmosphere of nitrogen, and the temperature was elevated up to 272°C. The reaction was then conducted at 272°C for 1 hour. Subsequently, the reaction solution was flashed in a condenser-fitted stirring tank heated at 250°C to obtain a mixed powder of PPS and salts. This mixed powder was slurried with 15 liters of deionized water of 70°C, and the resulting slurry was filtered with a centrifugal separator. The thus-obtained cake, 15 liters of deionized water and 13 ml of glacial acetic acid were charged into a stirrer-fitted autoclave, sealed in an atmosphere of a nitrogen gas, and heated at 190°C. When the temperature reached 190°C, the reaction mixture was cooled to 70°C. The resulting slurry was filtered with a centrifugal separator, washed with deionized water of 80°C, and dried in vacuo to give 2.56 kg of PPS. This PPS was linear, and had a number average molecular weight of 5,100.

### (3) A-3

An autoclave fitted with a stirrer was charged with 6.005 kg (25 mols) of sodium nitride 9-hydrate, 0.656 kg (8 mols) of sodium acetate and 5 kg of N-methyl-2-pyrolidone (hereinafter abbreviated as "NMP"). The temperature was gradually elevated up to 205°C while passing nitrogen to distill off 3.6 liters of water. Subsequently, the reaction vessel was cooled to 180°C, and 3.734 kg (25.4 mols) of 1,4-dichlorobenzene and 3.7 kg of NMP were added thereto. The reaction vessel was sealed in an atmosphere of nitrogen, and the temperature was elevated up to 272°C. The reaction was then conducted at 272°C for 1 hour. Subsequently, the reaction solution was flashed in a condenser-fitted stirring tank heated at 250°C to obtain a mixed powder of PPS and salts. This mixed powder was slurried with 15 liters of deionized water of 70°C, and the resulting slurry was filtered with a centrifugal separator. The thus-obtained cake, 15 liters of deionized water and 13 ml of glacial acetic acid were charged into a stirrer-fitted autoclave, sealed in an atmosphere of a nitrogen gas, and heated at 190°C. When the temperature reached 190°C, the reaction mixture was cooled to 70°C. The resulting slurry was filtered with a centrifugal separator, washed with deionized water of 80°C, and dried in vacuo to give 2.57 kg of PPS. The resulting PPS was heat-treated in air at 220°C until the melt flow rate reached 120 g/10 min. This PPS is one having a crosslinked structure and heat-treated in an atmosphere of oxygen. The number average molecular weight was 9,300, and the total ash content was 0.19% by weight. The melt flow rate in 15-minute residence was 81% of the melt flow rate in 5-minute residence.

### (4) A-4

An autoclave fitted with a stirrer was charged with 6.005 kg (25 mols) of sodium nitride 9-hydrate and 5 kg of N-methyl-2-pyrolidone (hereinafter abbreviated as "NMP"). The temperature was gradually elevated up to 205°C while passing nitrogen to distill off 3.6 liters of water. Subsequently, the reaction vessel was cooled to 180°C, and 3.770 kg (25.6 mols) of 1,4-dichlorobenzene and 3.7 kg of NMP were added thereto. The reaction vessel was sealed in an atmosphere of nitrogen, and the temperature was elevated up to 272°C. The reaction was then conducted at 272°C for 1 hour. Subsequently, the reaction solution was flashed in a condenser-fitted stirring tank heated at 250°C to obtain a mixed powder of PPS and salts. This mixed powder was slurried with 15 liters of deionized water of 70°C, and the resulting slurry was filtered with a centrifugal separator. The thus-obtained cake, 15 liters of deionized water and 22.5 ml of calcium acetate were charged into a stirrer-fitted autoclave, sealed in an atmosphere of a nitrogen gas, and heated at 190°C. When the temperature reached 190°C, the reaction mixture was cooled to 70°C. The resulting slurry was filtered with a centrifugal separator, washed with deionized water of 80°C, and dried in vacuo to give 2.57 kg of PPS. The resulting PPS was heat-treated in air at 220°C until the melt flow rate reached 640 g/10 min. This PPS is one having a crosslinked structure and heat-treated in an atmosphere of oxygen. This PPS had the crystallization temperature in temperature rise of 128.6°C and the crystallization temperature in temperature drop of 223.7°C.

### (5) A-5

PPS obtained by the polymerization as in PPS-2 was heat-treated in air at 220°C until the melt flow rate reached 118 g/10 min. This PPS is one having a crosslinked structure and heat-treated in an atmosphere of oxygen. This PPS had the crystallization temperature in temperature rise of 132.3°C and the crystallization temperature in temperature drop of 218.3°C.

### (6) A-6

PPS obtained by the polymerization as in PPS-2 was heat-treated in air at 220°C until the melt flow rate reached 75 g/10 min. This PPS is one having a crosslinked structure and heat-treated in an atmosphere of oxygen. This PPS had the crystallization temperature in temperature rise of 136.6°C and the crystallization temperature in temperature drop of 209.2°C.

### Reference Example 2

### (Synthesis of an aromatic group-containing oligomer and polymer)

### (1) B-101

Hexamethyleneammonium adipate (salt of equimolar amounts of hexamethylenediamine and adipic acid, 7.61 kg, 29.0 mols), 3.66 kg (22.0 mols) of terephthalic acid, 3.97 kg of an aqueous solution containing 64.5% by weight of hexamethylenediamine, 31 g of acetic acid and 6.38 kg of deionized water were charged into a 0.10-cubic-meter batchwise pressurized polymerization vessel. After this polymerization vessel was fully purged with nitrogen, the temperature was elevated to 140°C, and the mixture was preliminarily concentrated to 80% by weight at a pressure of 4.0 kg/cm² while being stirred. Subsequently, the temperature was elevated up to 230°C over the course of 3.5 hours with stirring, and the polymerization pressure was set at 15 kg/cm²•G. Further, the temperature was maintained at from 285 to 290°C for 30 minutes to complete the reaction. The injection was conducted over the course of 1 hour while maintaining a water vapor pressure at 12 kg/cm²•G upon feeding deionized water at a rate of 3 liters per hour using a metering pump. This condensate had the relative viscosity of 1.45, the melting peak temperature of 280°C, and the crystallization temperature in temperature drop of 247.5°C.

### (2) B-102

Hexamethyleneammonium adipate (7.61 kg, 29.0 mols), 3.66 kg (22.0 mols) of terephthalic acid, 3.97 kg of an aqueous solution containing 64.5% by weight of hexamethylenediamine, 31 g of acetic acid and 6.38 kg of deionized water were charged into a 0.10-cubic-meter batchwise pressurized polymerization vessel. After this polymerization vessel was fully purged with nitrogen, the temperature was elevated to 140°C, and the mixture was preliminarily concentrated to 80% by weight at a pressure of 4.0 kg/cm² while being stirred. Subsequently, the temperature was elevated up to 230°C over the course of 3.5 hours with stirring, and the polymerization pressure was set at 15 kg/cm²•G. Further, the temperature was maintained at from 245 to 250°C for 30 minutes to complete the reaction. The injection was conducted over the course of 1 hour while maintaining a water vapor pressure at 25 kg/cm²•G upon feeding deionized water at a rate of 3 liters per hour using a metering pump. This condensate had the relative viscosity of 1.25, the melting peak temperature of 278°C, and the crystallization temperature in temperature drop of 253.5°C.

### (3) B-103

Hexamethyleneammonium adipate (8.58 kg, 32.7 mols), 3.09 kg (18.6 mols) of terephthalic acid, 3.36 kg of an aqueous solution containing 64.5% by weight of hexamethylenediamine, 31 g of acetic acid and 6.38 kg of deionized water were charged into a 0.10-cubic-meter batchwise pressurized polymerization vessel. After this polymerization vessel was fully purged with nitrogen, the temperature was elevated to 140°C, and the mixture was preliminarily concentrated to 80% by weight at a pressure of 4.0 kg/cm² while being stirred. Subsequently, the temperature was elevated up to 230°C over the course of 3.5 hours with stirring, and the polymerization pressure was set at 15 kg/cm²•G. Further, the temperature was maintained at from 245 to 250°C for 30 minutes to complete the reaction. The injection was conducted over the course of 1 hour while maintaining a water vapor pressure at 21 kg/cm²•G upon feeding deionized water at a rate of 3 liters per hour using a metering pump. This condensate had the relative viscosity of 1.28, the melting peak temperature of 274°C, and the crystallization temperature in temperature drop of 238.5°C.

### (4) B-104

Forty grams (0.152 mols) of hexamethyleneammonium adipate, 60 g (0.213 mols) of a salt of equimolar amounts of hexamethylenediamine and terephthalic acid, 6.7 g of benzoic acid, 3.2 g of hexamethylenediamine and 100 g of deionized water were charged into an autoclave. After the autoclave was fully purged with nitrogen, the temperature was gradually elevated to between 200 and 210°C over the course of 3 hours. Then, the temperature was elevated up to 270°C while the pressure inside the system was maintained at 17.5 kg/cm²•G. While this temperature was maintained, the pressure was progressively released over the course of 2 hours to complete the reaction. After the releasing of the pressure was completed, the product was cooled, and the content was taken out. This was milled to obtain a sample. The resulting condensate had the relative viscosity of 1.31, the melting peak temperature of 315°C, and the crystallization temperature in temperature drop of 273.6°C.

### (5) B-105

Thirty grams (0.263 mols) of ε-caprolactam, 70 g (0.248 mols) of a salt of equimolar amounts of hexamethylenediamine and terephthalic acid, 8.1 g of benzoic acid and 3.9 g of hexamethylenediamine were charged into an autoclave, and the polycondensation reaction was conducted in the same manner as in B-104. The resulting condensate had the relative viscosity of 1.65, the melting peak temperature of 300°C, and the crystallization temperature in temperature drop of 271.0°C.

### (6) B-106

A salt (65 g, 0.230 mols) of equimolar amounts of hexamethylenediamine and terephthalic acid, 35 g (0.124 mols) of equimolar amounts of hexamethylenediamine and isophthalic acid, 5.2 g of benzoic acid and 2.5 g of hexamethylenediamine were charged into an autoclave, and the polycondensation reaction was conducted in the same manner as in B-104. The resulting condensate had the relative viscosity of 1.40, the melting peak temperature of 300°C, and the crystallization temperature in temperature drop of 262.5°C.

### (7) B-107

A salt (65 g, 0.178 mols) of equimolar amounts of 1,12-diaminododecane and terephthalic acid, 35 g (0.133 mols) of hexamethyleneammonium adipate, 4.8 g of benzoic acid and 2.3 g of hexamethylenediamine were charged into an autoclave, and the polycondensation reaction was conducted in the same manner as in B-104. The resulting condensate had the relative viscosity of 1.40, the melting peak temperature of 290°C, and the crystallization temperature in temperature drop of 247.5°C.

### (8) B-108

Eighty grams (0.305 mols) of hexamethyleneammonium adipate, a salt (20 g, 0.071 mols) of equimolar amounts of hexamethylenediamine and terephthalic acid, 6.7 g of benzoic acid, 3.2 g of hexamethylenediamine and 100 g of deionized water were charged into an autoclave, and the polycondensation reaction was conducted in the same manner as in B-104. The resulting condensate had the relative viscosity of 1.45, the melting peak temperature of 265°C, and the crystallization temperature in temperature drop of 232.5°C.

### (9) B-109

The above-mentioned product B-101 was dried in vacuo at 100°C for 24 hours, and melted at the maximum resin temperature of 300°C with a degree of vacuum of -700 mmHg for a residence time of 95 seconds using a bent-type twin-screw extruder having a diameter of 30 mm to provide a high molecular weight. A polymer having the relative viscosity of 2.50 and the number average molecular weight of approximately 13,300 was obtained.

### (10) B-110

Low-molecular nylon 66 having the relative viscosity of 1.45.

### (11) B-111

Stearic acid (28.4 g, 0.1 mols), 75.0 g (1.25 mols) of ethylenediamine, 146.0 g (1 mol) of adipic acid and 30 g of deionized water were charged into an autoclave. After the autoclave was fully purged with nitrogen, the temperature was gradually elevated up to 180°C. After the temperature reached 180°C, the pressure was progressively released, and the inner pressure of the vessel was returned to an atmospheric pressure. Subsequently, while the temperature was gradually elevated, the reaction was continued in a nitrogen stream for 1 hour. The resulting condensate had the relative viscosity of 1.15.

### (12) B-201

In a flask fitted with a nitrogen introduction tube and a stirrer, 1.015 kg (5.0 mols) of terephthaloyl dichloride were dissolved in 1.5 liters of NMP. To this solution were added dropwise 1.02 kg (10.1 mols) of aniline such that the temperature of the reaction solution was maintained at 30°C. The reaction solution was stirred for 1 hour, and heated at 150°C to complete the reaction.

The resulting condensate had the molecular weight of 316, the melting point of 349°C and the crystallization temperature in temperature drop of 320°C.

### (13) B-202

In a flask fitted with a nitrogen introduction tube and a stirrer, 1.015 kg (5.0 mols) of terephthaloyl dichloride were dissolved in 1.5 liters of NMP. To this solution were added dropwise 1.09 kg (10.1 mols) of p-phenylenediamine such that the temperature of the reaction solution was maintained at 30°C. The reaction solution was stirred for 1 hour, and 1.58 kg (10.1 mols) of benzoic acid chloride were added dropwise to this solution. The mixture was heated to 150°C to complete the reaction.

The resulting condensate had the molecular weight of 554, the melting point of 345°C and the crystallization temperature in temperature drop of 314°C.

### (14) B-203

In a flask fitted with a nitrogen introduction tube and a stirrer, 1.42 kg (5.0 mols) of 6-naphthalenedicarbonyl dichloride were dissolved in 1.5 liters of NMP. To this solution were added dropwise 1.02 kg (10.1 mols) of aniline such that the temperature of the reaction solution was maintained at 30°C. The reaction solution was stirred for 1 hour, and heated to 150°C to complete the reaction.

The resulting condensate had the molecular weight of 388, the melting point of 357°C and the crystallization temperature in temperature drop of 324°C.

### (15) B-204

In a flask fitted with a nitrogen introduction tube and a stirrer, 1.015 kg (5.0 mols) of terephthaloyl dichloride were dissolved in 1.5 liters of NMP. To this solution were added dropwise 0.949 kg (10.1 mols) of phenol such that the temperature of the reaction solution was maintained at 30°C. The reaction solution was stirred for 1 hour, and heated to 150°C to complete the reaction.

The resulting condensate had the molecular weight of 318, the melting point of 308°C and the crystallization temperature in temperature drop of 287°C.

### (16) B-205

Bis(4-phenoxyphenyl) ketone having the molecular weight of 366, the melting point of 330°C and the crystallization temperature in temperature drop of 302°C.

### (17) B-206

Bis(4-phenoxyphenyl)sulfone having the molecular weight of 402, the melting point of 330°C and the crystallization temperature in temperature drop of 297°C.

### (18) B-207

Polyhexamethyleneterephthalamide (nylon 6T) having the relative viscosity of 1.21, the number average molecular weight of 5,000, the melting point of 371.4°C, and the crystallization temperature in temperature drop of 344.9°C.

### (19) B-208

In a flask fitted with a nitrogen introduction tube and a stirrer, 1.576 kg (10.1 mols) of benzoyl chloride were dissolved in 1.5 liters of NMP. To this solution were added dropwise 0.30 kg (5 mols) of ethylenediamine such that the temperature of the reaction solution was maintained at 30°C. The reaction solution was stirred for 1 hour, and heated to 150°C to complete the reaction.

The resulting condensate had the molecular weight of 268, the melting point of 210°C and the crystallization temperature in temperature drop of 191°C.

### Reference Example 3

### (Other components)

### (1) Filler

C-1: E glass fiber having an average fiber diameter of 13 µm
C-2: calcium carbonate
C-3: E glass fiber having an average fiber diameter of 9 µm
C-4: E glass fiber having an average fiber diameter of 6 µm

### (2) Alkoxysilane compound

D-1: β-(3,4-epoxycyclohexyl)ethyltrimethoxysilane
D-2: γ-aminopropyltrimethoxysilane
D-3: γ-ureidopropyltriethoxysilane
D-4: γ-isocyanatopropyltriethoxysilane

### (3) Ester compound and amide compound

E-1: ethylene glycol dimontanate
E-2: ethylenediamine distearylamide
E-3: Amide compound formed by charging 2 mols of stearic acid and 1 mol of sebacic acid into a reaction vessel having a condenser-fitted water measuring tube and a stirrer, heat-melting the mixture, adding dropwise 2 mols of ethylenediamine thereto, starting the dehydration reaction in a nitrogen stream at 160°C, and conducting the reaction at from 250 to 260°C for approximately 7 hours until the amine value reached 5 or less.

### (5) Metal salt

F-1: calcium hypophosphate
F-2: calcium carbonate having an average particle diameter of 2.1 µm

### Examples 1 to 8

(A) The PPS resin, (B) the aromatic group-containing oligomer and other additives in amounts shown in Table 1 were dry-blended, and preliminarily mixed with a tumbler. The mixture was melt-kneaded using a twin-screw extruder of which the cylinder temperature had been set at from 300 to 320°C, pelletized using a strand cutter, and dried overnight at 120°C. The resulting pellets were measured for the crystallization characteristics and the length of burr. The results are shown in Table 1.

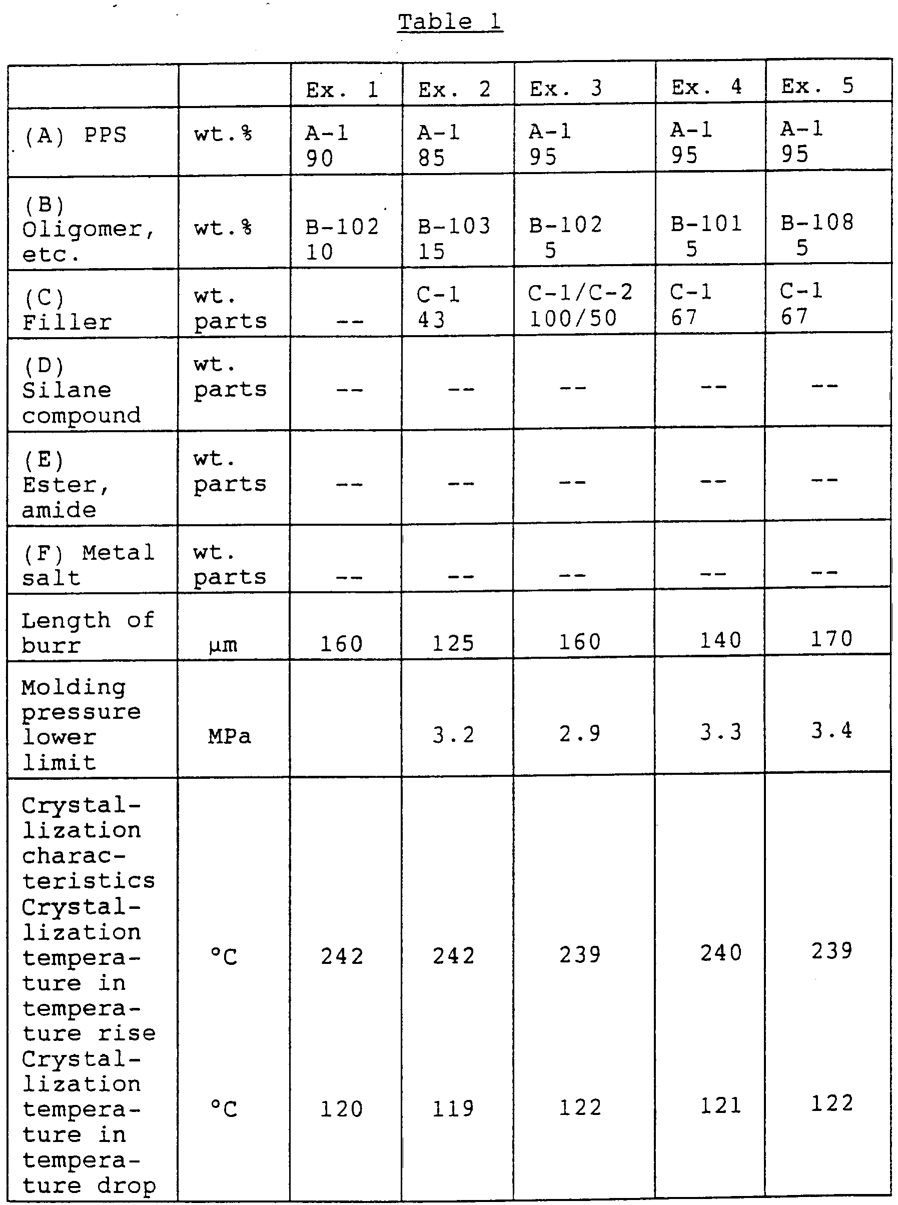

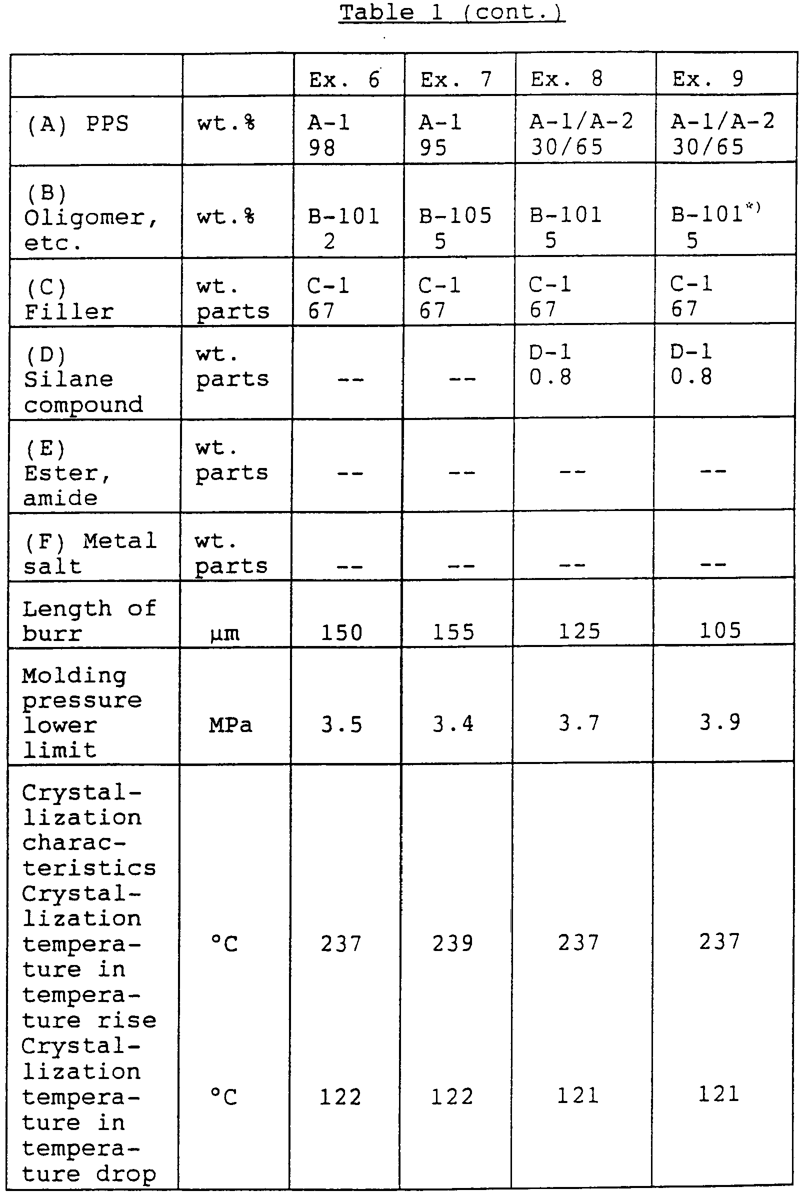

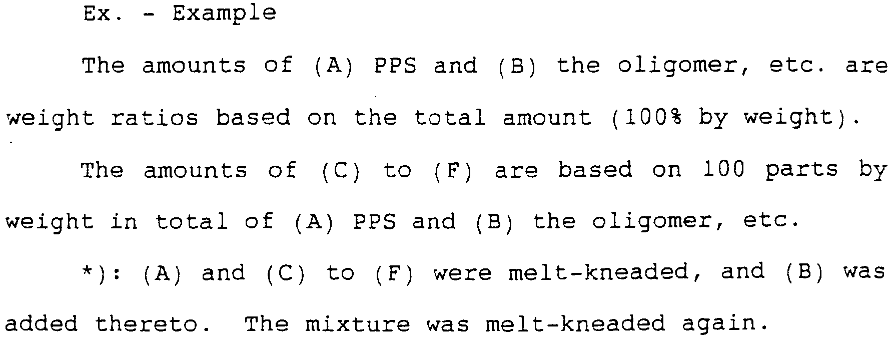

### Examples 9 to 17

(A) The PPS resin and other additives in amounts shown in Table 1 and 2 were dry-blended, and preliminarily mixed by means of a tumbler. The mixture was melt-kneaded using a twin-screw extruder of which the cylinder temperature had been set at from 300 to 320°C, pelletized using a strand cutter, and dried overnight at 120°C. The resulting pellets were measured for the crystallization characteristics and the length of burr. The results are shown in Table 1 and 2.

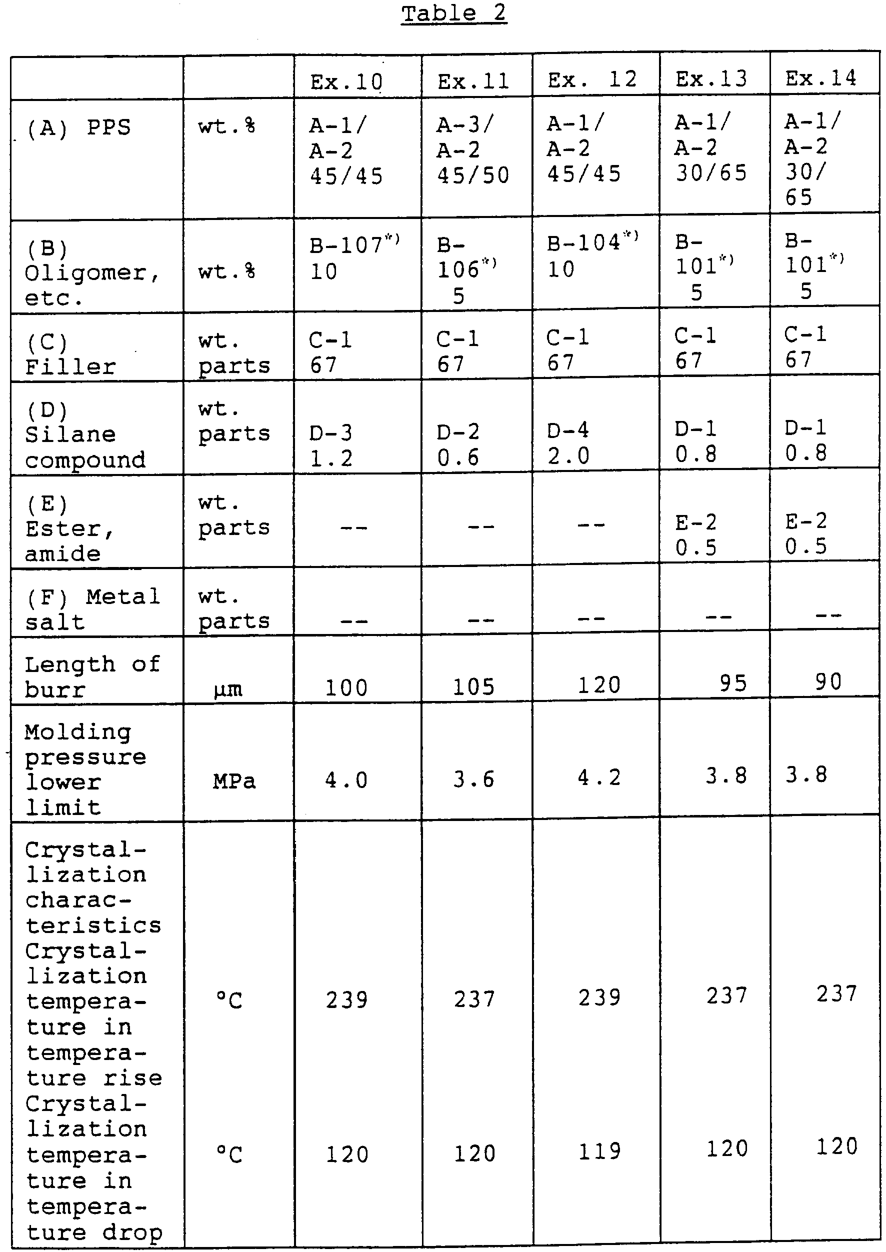

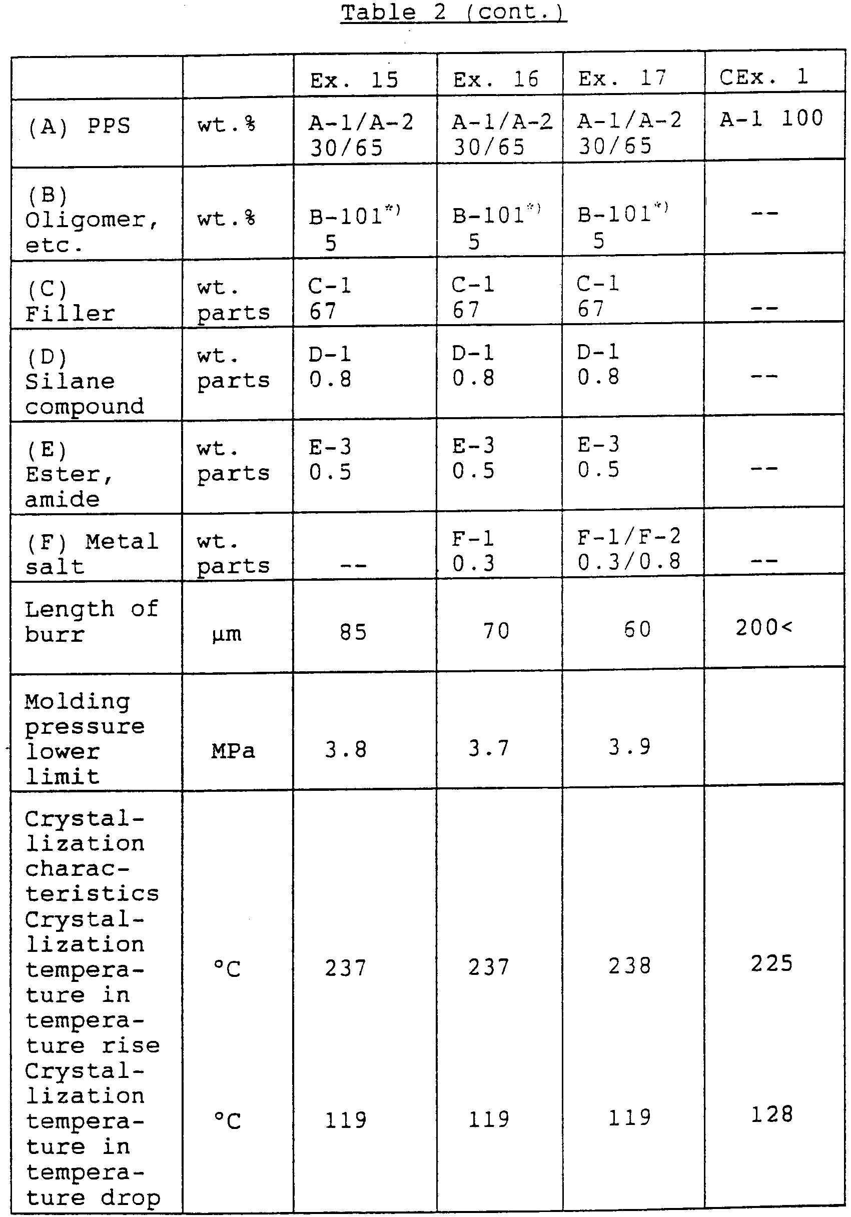

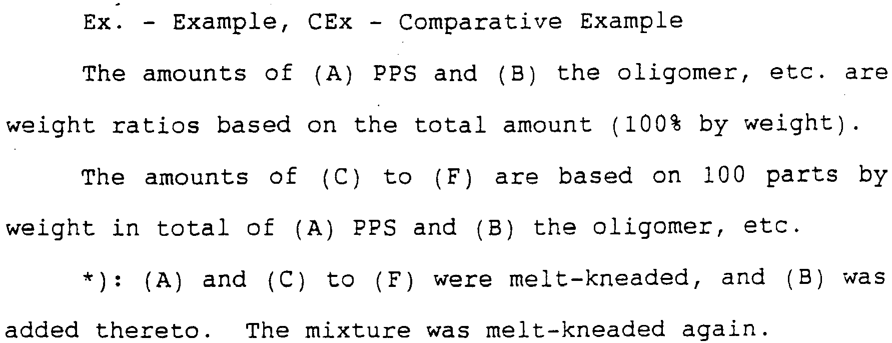

### Comparative Examples 1 to 4, 7 and 9 to 11

The components were dry-blended in the same manner as in Examples 1, 2, 3, 4, 8 and 10 to 12 except that (B) the aromatic group-containing oligomer was not added, and preliminarily mixed by means of a tumbler. The mixture was then melt-kneaded using a twin-screw extruder of which the cylinder temperature had been set at from 300 to 320°C, pelletized using a strand cutter, and dried overnight at 120°C. The resulting pellets were measured for the crystallization characteristics and the length of burr. The results are shown in Table 2 and 3.

**Table 3**

| | | CEx.2 | CEx.3 | CEx. 4 | CEx.5 | CEx. 6 |
|---|---|---|---|---|---|---|
| (A) PPS | wt.% | A-1 100 | A-1 100 | A-1 100 | A-1 95 | A-1 95 |
| (B) Oligomer, etc. | wt.% | -- | -- | - | B-110 5 | B-111 5 |
| (C) Filler | wt. parts | C-1 67 | C-1 43 | C-1/C-2 100/50 | C-1 67 | C-1 67 |
| (D) Silane compound | wt. parts | -- | -- | -- | -- | -- |
| (E) Ester, amide | wt. parts | -- | -- | -- | -- | -- |
| (F) Metal salt | wt. parts | -- | -- | -- | -- | -- |
| Length of burr | µm | 200< | 200< | 200< | 200< | 200< |
| Molding pressure lower limit | MPa | 3.8 | 3.5 | 3.3 | 3.4 | 3.5 |
| Crystallization characteristics | | | | | | |
| Crystallization temperature in temperature rise | °C | 227 | 227 | 227 | 229 | 225 |
| Crystallization temperature in temperature drop | °C | 128 | 128 | 129 | 121 | 124 |

| | | CEx.7 | CEx.8 | CEx.9 | CEx.10 | CEx.11 |
|---|---|---|---|---|---|---|
| (A) PPS | wt.% | A-1/A-2 31.5/68.5 | A-1/A-2 30/65 | A-1/A-2 50/50 | A-3/A-2 47.4/52.6 | A-1/A-2 50/50 |
| (B) Oligomer, etc. | wt.% | -- | B-109*⁾ 5 | -- | -- | -- |
| (C) Filler | wt. parts | C-1 67 | C-1 67 | C-1 67 | C-1 67 | C-1 67 |
| (D) Silane compound | wt. parts | D-1 0.8 | D-1 0.8 | D-3 1.2 | D-2 0.6 | D-4 2.0 |
| (E) Ester, amide | wt. parts | -- | -- | -- | -- | -- |
| (F) Metal salt | wt. parts | -- | -- | -- | -- | -- |
| Length of burr | µm | 155 | 150 | 140 | 145 | 145 |
| Molding pressure lower limit | MPa | 4.1 | 4.1 | 4.4 | 4.0 | 4.5 |
| Crystallization characteristics | | | | | | |
| Crystallization temperature in temperature rise | °C | 231 | 234 | 227 | 230 | 228 |
| Crystallization temperature in temperature drop | °C | 125 | 124 | 128 | 129 | 128 |
| CEx - Comparative Example | | | | | | |
| The amounts of (A) PPS and (B) the oligomer, etc. are weight ratios based on the total amount (100% by weight). | | | | | | |
| The amounts of (C) to (F) are based on 100 parts by weight in total of (A) PPS and (B) the oligomer, etc. | | | | | | |

| | | | | | | |
|---|---|---|---|---|---|---|
| *): (A) and (C) to (F) were melt-kneaded, and (B) was added thereto. The mixture was melt-kneaded again. | | | | | | |

### Comparative Examples 5 and 6

The components were dry-blended in the same manner as in Example 4 except that aromatic group-free amide oligomers having the relative viscosities of 1.5 and 1.15 were used instead of (B) the aromatic group-containing oligomer, and preliminarily mixed by means of a tumbler for 2 minutes. The mixture was melt-kneaded using a twin-screw extruder of which the cylinder temperature had been set at from 300 to 320°C, pelletized using a strand cutter, and dried overnight at 120°C. The resulting pellets were measured for the crystallization characteristics and the length of burr. The results are shown in Table 3.

### Comparative Example 8

The melt-kneading, the pelletizing and the drying were conducted at two stages in the same manner as in Example 7 except that an aromatic group-containing amide polymer having a relative viscosity of 2.5 was used instead of (B) the aromatic group-containing oligomer. The resulting pellets were measured for the crystallization characteristics and the length of burr. The results are shown in Table 3.

### Examples 18 to 25

(A) The PPS resin, (B) the aromatic group-containing oligomer and other additives in amounts shown in Table 4 were dry-blended, and preliminarily mixed by means of a tumbler for 2 minutes. The mixture was then melt-kneaded using a twin-screw extruder of which the cylinder temperature had been set at from 300 to 350°C, pelletized using a strand cutter, and dried overnight at 120°C. The pellets were measured for the crystallization characteristics and the length of burr. The results are shown in Table 4.

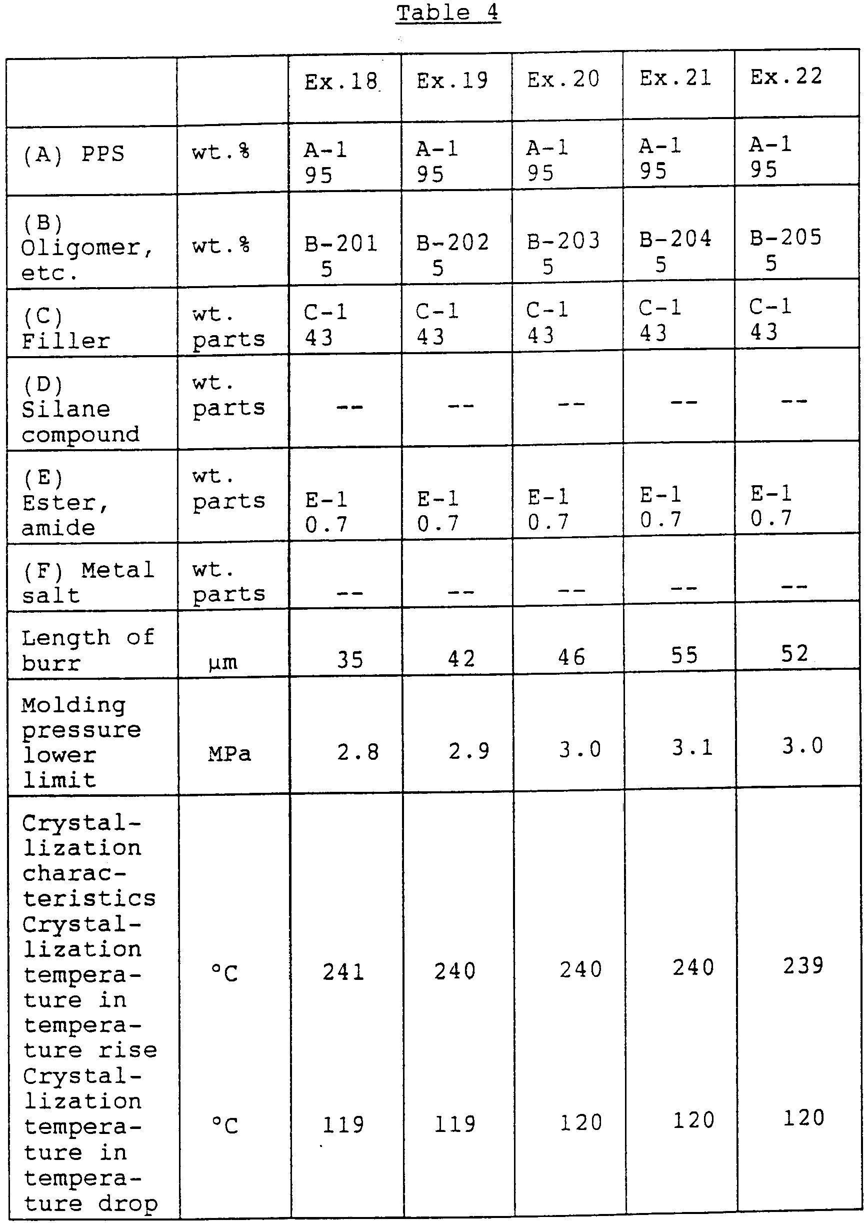

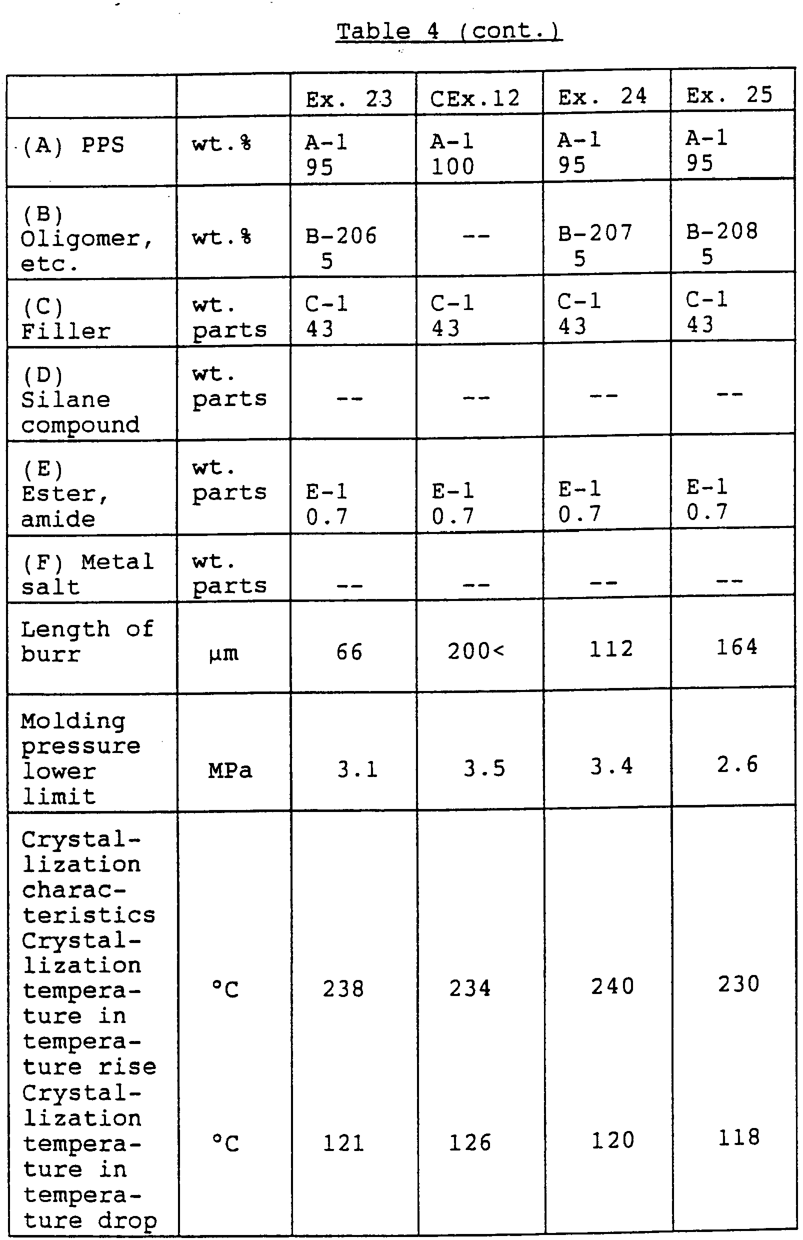

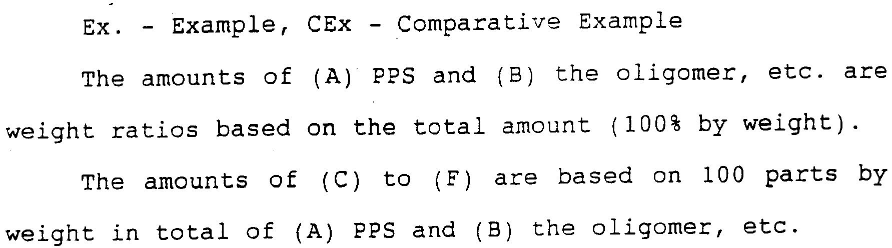

### Comparative Example 12

The crystallization characteristics and the length of burr were measured in the same manner as in Examples 18 to 25 except that (B) the aromatic group-containing oligomer was not added. The results are shown in Table 4.

### Examples 26 and 27 and Comparative Example 13

The components in amounts shown in Table 2 were dry-blended in the same manner as in Example 18 except that the type of (A) the PPS resin was changed, and preliminarily mixed by means of a tumbler for 2 minutes. The mixture was melt-kneaded using a twin-screw extruder of which the cylinder temperature had been set at from 300 to 350°C, pelletized using a strand cutter, and dried overnight at 120°C. The resulting pellets were measured for the crystallization characteristics and the length of burr. The results are shown in Table 5.

**Table 5**

| | | Ex. 26 | Ex. 27 | CEx. 13 |
|---|---|---|---|---|
| (A) PPS | wt.% | A-4 95 | A-5 95 | A-6 95 |
| (B) Oligomer, etc. | wt.% | B-201 5 | B-201 5 | B-201 5 |
| (C) Filler | wt. parts | C-1 43 | C-1 43 | C-1 43 |
| (D) Silane compound | wt. parts | -- | -- | -- |
| (E) Ester, amide | wt. parts | E-1 0.7 | E-1 0.7 | E-1 0.7 |
| (F) Metal salt | wt. parts | -- | -- | -- |
| Length of burr | µm | 92 | 134 | 195 |
| Molding pressure lower limit | MPa | 3.0 | 3.8 | 4.1 |
| Crystallization characteristics | | | | |
| Crystallization temperature in temperature rise | °C | 237 | 236 | 232 |
| Crystallization temperature in temperature drop | °C | 123 | 124 | 126 |

| | | CEx. 14 | CEx. 15 | CEx. 16 |
|---|---|---|---|---|
| (A) PPS | wt.% | A-4 100 | A-5 100 | A-6 100 |
| (B) Oligomer, etc. | wt.% | -- | -- | -- |
| (C) Filler | wt. parts | C-1 43 | C-1 43 | C-1 43 |
| (D) Silane compound | wt. parts | -- | -- | -- |
| (E) Ester, amide | wt. parts | E-1 0.7 | E-1 0.7 | E-1 0.7 |
| (F) Metal salt | wt. parts | - | - | - |
| Length of burr | µm | 200< | 200< | 200< |
| Molding pressure lower limit | MPa | 3.9 | 4.6 | 4.9 |
| Crystallization characteristics | | | | |
| Crystallization tempera-ture in temperature rise | °C | 232 | 232 | 230 |
| Crystallization temperature in temperature drop | °C | 128 | 128 | 129 |
| Ex. - Example, CEx - Comparative Example | | | | |
| The amounts of (A) PPS and (B) the oligomer, etc. are weight ratios based on the total amount (100% by weight). | | | | |
| The amounts of (C) to (F) are based on 100 parts by weight in total of (A) PPS and (B) the oligomer, etc. | | | | |

### Comparative Examples 14 to 16

The components in amounts shown in Table 5 were dry-blended in the same manner as in Examples 7 and 8 and Comparative Example 13 except that (B) the aromatic group-containing oligomer was not added, and preliminarily mixed by means of a tumbler for 2 minutes. The mixture was melt-kneaded using a twin-screw extruder of which the cylinder temperature had been set at from 300 to 350°C, pelletized using a strand cutter, and dried overnight at 120°C. The resulting pellets were measured for the crystallization characteristics and the length of burr. The results are shown in Table 5.

### Examples 28 to 32

(A) The PPS resin, (B) the aromatic group-containing oligomer and other additives in amounts shown in Table 6 were dry-blended, and preliminarily mixed by means of a tumbler for 2 minutes. The mixture was then melt-kneaded using a twin-screw extruder of which the cylinder temperature had been set at from 300 to 340°C, pelletized using a strand cutter, and dried overnight at 120°C. The pellets were measured for the crystallization characteristics and the length of burr. The results are shown in Table 6.

**Table 6**

| | | Ex. 28 | Ex. 29 | Ex. 30 | Ex. 31 |
|---|---|---|---|---|---|
| (A) PPS | wt.% | A-1 95 | A-1 95 | A-1 95 | A-1 95 |
| (B) Oligomer, etc. | wt.% | B-201 5 | B-201 5 | B-201 5 | B-201 5 |
| (C) Filler | wt. parts | C-3 67 | C-3 67 | C-3 67 | C-1 67 |
| (D) Silane compound | wt. parts | D-1 1.0 | D-1 1.0 | D-1 1.0 | D-1 1.0 |
| (E) Ester, amide | wt. parts | E-1 0.5 | E-1 0.5 | E-3 0.5 | E-1 0.5 |
| (F) Metal salt | wt. parts | F-1 0.3 | F-1 0.3 | F-1 0.3 | F-1 0.3 |
| Length of burr | µm | 49 | 51 | 47 | 42 |
| Molding pressure lower limit | MPa | 3.2 | 3.3 | 3.3 | 3.0 |
| Crystallization characteristics | | | | | |
| Crystallization temperature in temperature rise | °C | 238 | 238 | 238 | 237 |
| Crystallization temperature in temperature drop | °C | 122 | 122 | 122 | 122 |

| | | Ex. 32 | CEx. 17 | Ex. 33 | CEx. 18 |
|---|---|---|---|---|---|
| (A) PPS | wt.% | A-1 95 | A-1 100 | A-4 95 | A-4 100 |
| (B) Oligomer, etc. | wt.% | B-201 5 | - | B-201 5 | - |
| (C) Filler | wt. parts | C-4 67 | C-3 67 | C-1/C-2 100/50 | C-1/C-2 100/50 |
| (D) Silane compound | wt. parts | D-1 1.0 | D-1 1.0 | -- | -- |
| (E) Ester, amide | wt. parts | E-1 0.5 | E-1 0.5 | E-1 0.8 | E-1 0.8 |
| (F) Metal salt | wt. parts | F-1 0.3 | F-1 0.3 | - | - |
| Length of burr | µm | 85 | 135 | 67 | 189 |
| Molding pressure lower limit | MPa | 4.8 | 4.4 | 2.1 | 3.3 |
| Crystallization characteristics | | | | | |
| Crystallization temperature in temperature rise | °C | 227 | 234 | 233 | 228 |
| Crystallization temperature in temperature drop | °C | 122 | 126 | 123 | 126 |
| Ex. - Example, CEx - Comparative Example | | | | | |
| The amounts of (A) PPS and (B) the oligomer, etc. are weight ratios based on the total amount (100% by weight). | | | | | |
| The amounts of (C) to (F) are based on 100 parts by weight in total of (A) PPS and (B) the oligomer, etc. | | | | | |

### Comparative Example 17

The components in amounts shown in Table 6 were dry-blended in the same manner as in Example 28 except that the aromatic group-containing oligomer was not added, and preliminarily mixed by means of a tumbler for 2 minutes. The mixture was then melt-kneaded using a twin-screw extruder of which the cylinder temperature had been set at from 300 to 340°C, pelletized using a strand cutter, and dried overnight at 120°C. The pellets were measured for the crystallization characteristics and the length of burr. The results are shown in Table 6.

### Example 33

(A) The PPS resin, (B) the aromatic group-containing oligomer and other additives in amounts shown in Table 6 were dry-blended, and preliminarily mixed by means of a tumbler for 2 minutes. The mixture was then melt-kneaded using a twin-screw extruder of which the cylinder temperature had been set at from 300 to 340°C, pelletized using a strand cutter, and dried overnight at 120°C. The pellets were measured for the crystallization characteristics and the length of burr. The results are shown in Table 6.

### Comparative Example 18

The components in amounts shown in Table 6 were dry-blended in the same manner as in Example 33 except that the aromatic group-containing oligomer was not added, and preliminarily mixed by means of a tumbler for 2 minutes. The mixture was then melt-kneaded using a twin-screw extruder of which the cylinder temperature had been set at from 300 to 340°C, pelletized using a strand cutter, and dried overnight at 120°C. The pellets were measured for the crystallization characteristics and the length of burr.

### Industrial Utilizability

The PPS resin composition of the present invention is one in which occurrence of burr is controlled, and which is excellent in the flowability and the crystallization characteristics. It is especially useful as a resin composition for producing molded articles such as miniature precision parts and the like.

## Claims

1. A polyphenylene sulfide resin composition comprising (A) from 99.9 to 80% by weight of a polyphenylene sulfide resin and (B) from 0.1 to 20% by weight of an aromatic group-containing oligomer, the crystallization peak temperature in temperature rise of the composition being 125°C or lower.

2. The polyphenylene sulfide resin composition recited in claim 1, wherein the crystallization peak temperature in temperature drop of (B) the aromatic group-containing oligomer is 240°C or higher.

3. The polyphenylene sulfide resin composition recited in any one of claims 1 and 2, wherein the molecular weight of (B) the aromatic group-containing oligomer is 10,000 or less.

4. The polyphenylene sulfide resin composition recited in any one of claims 1 to 3, wherein (B) the aromatic group-containing oligomer is a polycondensate obtained through at least one linkage selected from the group consisting of an amide group, a hydrazide group, an imide group, an ester group, an ether group, a ketone group, a urethane group and a sulfone group.

5. The polyphenylene sulfide resin composition recited in any one of claims 1 to 4, wherein (B) the aromatic group-containing oligomer is an aromatic group-containing oligomer having a melting peak temperature of 370°C or lower as measured by a differential scanning calorimeter (at a scanning rate of 20°C/min).

6. The polyphenylene sulfide resin composition recited in any one of claims 1 to 5, wherein (B) the aromatic group-containing oligomer is (B1) an aromatic group-containing amide oligomer which is a polycondensate containing one or more residues selected from divalent residues represented by the following structural formulas (I), (II) and (III) and one or more residues selected from the divalent residues represented by the following structural formulas (IV), (V) and (VI), the residues being linked through an amide bond, and which has a relative viscosity (measured at 25°C in a 1-% sulfuric acid solution) of from 1.01 to 2.00.
-CO-R¹-CO- (I)
-NH-R²-NH- (II)
-NH-R³-CO- (III)
-CO-Ar¹-CO- (IV)
-NH-Ar²-NH- (V)
-NH-Ar³-CO- (VI)
wherein
R¹, R² and R³ each represent a divalent non-aromatic organic group having from 2 to 20 carbon atoms, and they may be the same or different, and
Ar¹, Ar² and Ar³ each represent a divalent aromatic group having from 6 to 20 carbon atoms, and they may be the same or different.

7. The polyphenylene sulfide resin composition recited in claim 6, wherein (B1) the aromatic group-containing amide oligomer is a multi-component co-oligomer containing three or more residues.

8. The polyphenylene sulfide resin composition recited in claim 6, wherein (B1) the aromatic group-containing amide oligomer is a polycondensate obtained by linking the divalent residues represented by the above-mentioned structural formulas (I), (II) and (IV) through the amide bond, the molar ratio of (I) and (IV) being (I)/(IV) = (80 to 5)/(20 to 95).

9. The polyphenylene sulfide resin composition recited in claim 6, wherein (B1) the aromatic group-containing amide oligomer is a polycondensate obtained by linking the divalent residue represented by the above-mentioned structural formula (III) and substantially equimolar amounts of the divalent residues represented by the above-mentioned structural formulas (II) and (IV) through the amide bond, the molar ratio of (III) and (IV) being (III)/(IV) = (75 to 10)/(25 to 90).

10. The polyphenylene sulfide resin composition recited in claim 6, wherein (B1) the aromatic group-containing amide oligomer is a polycondensate obtained by linking the divalent residue represented by the above-mentioned structural formula (II) and at least two divalent residues represented by the above-mentioned structural formula (IV) through the amide bond.

11. The polyphenylene sulfide resin composition recited in any one of claims 6 to 10, wherein the relative viscosity (measured at 25°C in a 1-% sulfuric acid solution) of (B1) the aromatic group-containing amide oligomer is at least 1.01 and at most 1.70.

12. The polyphenylene sulfide resin composition recited in any one of claims 6 to 10, wherein at least a part of the end of (B1) the aromatic group-containing amide oligomer is capped with a monocarboxylic acid having from 1 to 20 carbon atoms and/or a monoamine having from 1 to 20 carbon atoms.

13. The polyphenylene sulfide resin composition recited in any one of claims 1 to 5, wherein (B) the aromatic group-containing oligomer is (B2) an aromatic group-containing amide oligomer which is a polycondensate obtained by linking divalent residues represented by the following structural formulas (VII), (VIII) and (IX) and one or more organic groups selected from monovalent residues represented by the following structural formulas (X) and (XI) through the amide bond.
-NH-Ar⁴-NH- (VII)
-NH-Ar⁵-CO- (VIII)
-CO-Ar⁶-CO- (IX)
wherein
Ar⁴, Ar⁵ and Ar⁶ each represent an organic group containing a divalent aromatic group having from 6 to 20 carbon atoms, and they may be the same or different.
-NH-Ar⁷ (X)
-CO-Ar⁸ (XI)
wherein
Ar⁷ and Ar⁸ each represent an organic group containing a monovalent aromatic group having from 6 to 20 carbon atoms, and they may be the same or different.

14. The polyphenylene sulfide resin composition recited in any one of claims 1 to 5, wherein (B) the aromatic group-containing oligomer is (B3) an aromatic group-containing ester oligomer which is a polycondensate obtained by linking divalent residues represented by the following structural formulas (XII), (XIII) and (XIV) and one or more organic residues selected from monovalent residues represented by the following structural formulas (XV) and (XVI) through an ester linkage.
-O-Ar⁹-O- (XII)
-O-Ar¹⁰-CO- (XIII)
-CO-Ar¹¹-CO- (XIV)
wherein
Ar⁹, Ar¹⁰ and Ar¹¹ each represent a divalent aromatic group-containing organic group having from 6 to 20 carbon atoms, and they may be the same or different.
-O-Ar¹² (XV)
-CO-Ar¹³ (XVI)
wherein
Ar¹² and Ar¹³ each represent an organic group containing a monovalent aromatic group having from 6 to 20 carbon atoms, and they may be the same or different.

15. The polyphenylene sulfide resin composition recited in any one of claims 1 to 14, wherein the crystallization peak temperature in temperature rise of (A) the polyphenylene sulfide resin as measured by a differential scanning calorimeter (at a scanning rate of 20°C/min) is 135°C or lower.

16. The polyphenylene sulfide resin composition recited in any one of claims 1 to 15, wherein the crystallization peak temperature in temperature drop of (A) the polyphenylene sulfide resin as measured by a differential scanning calorimeter (at a scanning rate of 20°C/min) is 210°C or higher.

17. The polyphenylene sulfide resin composition recited in any one of claims 1 to 16, wherein (A) the polyphenylene sulfide resin has a melt flow rate in 5-minute residence of at least 100 g/10 min as prescribed in ASTM D1238-86 (at 315.5°C under a load of 5,000 g).

18. The polyphenylene sulfide resin composition recited in any one of claims 1 to 17, wherein (A) the polyphenylene sulfide resin is a polyphenylene sulfide resin mixture of (A-1) from 5 to 90% by weight of a polyphenylene sulfide resin having a number average molecular weight of from 7,000 to 15,000 as measured by gel permeation chromatography using 1-chloronaphthalene as a solvent and having a total ash content of 0.3% by weight or less, and (A2) from 95 to 10% by weight of a polyphenylene sulfide resin being substantially free from a crosslinked structure and having a number average molecular weight of from 3,000 to 6,000 as measured in the above-mentioned manner.

19. The polyphenylene sulfide resin composition recited in claim 18, wherein (A1) the polyphenylene sulfide resin is (A1-1) a polyphenylene sulfide resin being substantially free from a crosslinked structure, having a number average molecular weight of from 7,000 to 15,000 as measured by gel permeation chromatography using 1-chloronaphthalene as a solvent and having a total ash content of 0.3% by weight or less.

20. The polyphenylene sulfide resin composition recited in claim 18, wherein (A1) the polyphenylene sulfide resin is a polyphenylene sulfide resin having a crosslinked structure, having a number average molecular weight of from 7,000 to 15,000 as measured by gel permeation chromatography using 1-chloronaphthalene as a solvent and having a total ash content of 0.3% by weight or less, a melt flow rate in 15-minute residence as prescribed in ASTM D1238-86 (at 315.5°C under a load of 5,000 g) being between 50 and 95% of a melt flow rate in 5-minute residence.

21. The polyphenylene sulfide resin composition recited in any one of claims 1 to 20, which further comprises from 10 to 400 parts by weight of (C) a filler per 100 parts by weight in total of (A) the polyphenylene sulfide resin and (B) the aromatic group-containing oligomer.

22. The polyphenylene sulfide resin composition recited in claim 21, wherein (C) the filler is a non-fibrous filler and/or a fibrous filler.

23. The polyphenylene sulfide resin composition recited in claim 22, wherein (C) the filler is (C-1) a glass fiber.

24. The polyphenylene sulfide resin composition recited in claim 23, wherein (C-1) the glass fiber has a diameter of at least 8 µm and at most 15 µm.

25. The polyphenylene sulfide resin composition recited in claim 23, wherein (C-1) the glass fiber has a glass fiber length of 400 µm or less on the weight average in the polyphenylene sulfide resin composition.

26. The polyphenylene sulfide resin composition recited in any one of claims 1 to 25, which further comprises (D) from 0.1 to 5 parts by weight, per 100 parts by weight in total of (A) the polyphenylene sulfide resin and (B) the aromatic group-containing oligomer, of an alkoxysilane compound containing at least one functional group selected from an epoxy group, an amino group, an isocyanate group, a hydroxyl group, a mercapto group and a ureido group.

27. The polyphenylene sulfide resin composition recited in claim 26, which is formed by mixing (A) the polyphenylene sulfide resin with (D) the alkoxysilane compound containing at least one functional group selected from an epoxy group, an amino group, an isocyanate group, a hydroxyl group, a mercapto group and a ureido group, melt-kneading the mixture, then mixing the reaction mixture with (B) the aromatic group-containing oligomer, and melt-kneading the resulting mixture.

28. The polyphenylene sulfide resin composition recited in any one of claims 1 to 27, which further comprises (E) from 0.05 to 1.5 parts by weight, per 100 parts by weight in total of (A) the polyphenylene sulfide resin and (B) the aromatic group-containing oligomer, of at least one additive (E) selected from (E-1) an ester compound composed of an aliphatic carboxylic acid having from 12 to 40 carbon atoms and a polyhydric alcohol, (E-2) an amide compound composed of an aliphatic monocarboxylic acid having from 12 to 40 carbon atoms and a diamine and (E-3) an amide compound composed of an aliphatic monocarboxylic acid having from 12 to 40 carbon atoms, an aliphatic polybasic acid having from 2 to 20 carbon atoms and an aliphatic diamine.

29. The polyphenylene sulfide resin composition recited in any one of claims 1 to 28, which further comprises (F) from 0.01 to 5 parts by weight, per 100 parts by weight in total of (A) the polyphenylene sulfide resin and (B) the aromatic group-containing oligomer, of at least one metal salt selected from a carbonate, a halide, a sulfate, a nitrate, a phosphate, a phosphite, a hypophosphite and their double salt of at least one metal selected from lithium, sodium, potassium, magnesium, calcium, barium, iron, cobalt, nickel, copper, silver, zinc, aluminum and tin.

30. The polyphenylene sulfide resin composition recited in any one of claims 1 to 29, wherein the crystallization peak temperature in temperature drop as measured by a differential scanning calorimeter (at a scanning rate of 20°C/min) is 230°C or higher.

31. The polyphenylene sulfide resin composition recited in any one of claims 1 to 30, which is used for a molded article having a thin portion 2 mm or less in thickness.

32. The polyphenylene sulfide resin composition recited in claims 1 to 31, which is used for electrical and electronic parts.

33. A process for producing the polyphenylene sulfide resin composition recited in claim 27, which comprises mixing (A) the polyphenylene sulfide resin with (D) the alkoxysilane compound having at least one functional group selected from an epoxy group, an amino group, an isocyanate group, a hydroxyl group, a mercapto group and a ureido group, melt-kneading the mixture, then mixing the reaction mixture with (B) the aromatic group-containing oligomer, and melt-kneading the resulting mixture.

34. A molded article which is formed by molding a polyphenylene sulfide resin composition comprising (A) from 99.9 to 80% by weight of a polyphenylene sulfide resin and (B) from 0.1 to 20% by weight of an aromatic group-containing oligomer, the crystallization peak temperature in temperature rise thereof being 125°C or lower.
